# EUROPEAN PATENT SPECIFICATION

(11) **EP 3 274 861 B1**
(45) Date of publication and mention of the grant of the patent: **24.03.2021**
(21) Application number: 16773683.4
(22) Date of filing: 27.02.2016
(51) Int. Cl.: G06F 15/173, G06F 11/16, G06F 11/07

(54) **RELIABILITY, AVAILABILITY, AND SERVICEABILITY IN MULTI-NODE SYSTEMS WITH DISAGGREGATED MEMORY**
ZUVERLÄSSIGKEIT, VERFÜGBARKEIT UND BETRIEBSFÄHIGKEIT IN MEHRFACHKNOTENSYSTEMEN MIT AUFGEGLIEDERTEM SPEICHER
FIABILITÉ, DISPONIBILITÉ, ET APTITUDE À L'ENTRETIEN DANS DES SYSTÈMES À NOEUDS MULTIPLES AVEC MÉMOIRE DÉSAGRÉGÉE

(30) Priority: 27.03.2015 US 201514671881
(43) Date of publication of application: 31.01.2018
(73) Proprietor: INTEL Corporation, Santa Clara, CA 95054-1549 (US)
(72) Inventor: DAS SHARMA, Debendra, Saratoga, California 95070 (US); JEN, Michelle C., Mountain View, California 94040 (US)
(74) Representative: Samson & Partner Patentanwälte mbB
(86) International application number: PCT/US2016/019981
(87) International publication number: WO 2016/160218

(56) References cited:
- US-A1- 2003 110 354
- US-A1- 2004 117 562
- US-A1- 2005 108 463
- US-A1- 2007 233 977
- US-A1- 2009 307 691
- US-A1- 2013 318 297
- US-B1- 7 085 883

## Description

### FIELD

This disclosure pertains to computing system, and in particular (but not exclusively) to memory access between components in a computing system.

### BACKGROUND

Advances in semi-conductor processing and logic design have permitted an increase in the amount of logic that may be present on integrated circuit devices. As a corollary, computer system configurations have evolved from a single or multiple integrated circuits in a system to multiple cores, multiple hardware threads, and multiple logical processors present on individual integrated circuits, as well as other interfaces integrated within such processors. A processor or integrated circuit typically comprises a single physical processor die, where the processor die may include any number of cores, hardware threads, logical processors, interfaces, memory, controller hubs, etc.

As a result of the greater ability to fit more processing power in smaller packages, smaller computing devices have increased in popularity. Smartphones, tablets, ultrathin notebooks, and other user equipment have grown exponentially. However, these smaller devices are reliant on servers both for data storage and complex processing that exceeds the form factor. Consequently, the demand in the high-performance computing market (i.e. server space) has also increased. For instance, in modern servers, there is typically not only a single processor with multiple cores, but also multiple physical processors (also referred to as multiple sockets) to increase the computing power. But as the processing power grows along with the number of devices in a computing system, the communication between sockets and other devices becomes more critical.

In fact, interconnects have grown from more traditional multi-drop buses that primarily handled electrical communications to full blown interconnect architectures that facilitate fast communication. Unfortunately, as the demand for future processors to consume at even higher-rates corresponding demand is placed on the capabilities of existing interconnect architectures.

US 7,085,883 B1 pertains to migrating a volume and a virtual disk from a first storage controller to a second storage controller in a distributed storage system in that a protocol stack for the virtual disk is configured from the bottom up. The protocol stack includes a storage controller block transport protocol target portion, a virtual disk mapping portion, and a disk enclosure block transport protocol initiator portion to form the virtual disk on storage controller.

### BRIEF DESCRIPTION OF THE DRAWINGS

FIG. 1 illustrates an embodiment of a computing system including an interconnect architecture.
FIG. 2 illustrates an embodiment of a interconnect architecture including a layered stack.
FIG. 3 illustrates an embodiment of a request or packet to be generated or received within an interconnect architecture.
FIG. 4 illustrates an embodiment of a transmitter and receiver pair for an interconnect architecture.
FIG. 5 illustrates an embodiment of a layered protocol stack associated with a high performance general purpose input/output (GPIO) interconnect.
FIG. 6 illustrates a representation of an example multi-slot flit.
FIG. 7 illustrates an example system utilizing buffered memory access.
FIG. 8A illustrates a simplified block diagram of an embodiment of an example node.
FIG. 8B illustrates a simplified block diagram of an embodiment of an example system including a plurality of nodes.
FIG. 8C illustrates another simplified block diagram of an embodiment of an example system including a plurality of nodes.
FIG. 9 is a representation of data transmitted according to an example shared memory link.
FIG. 10A is a representation of data transmitted according to another example of a shared memory link.
FIG. 10B is a representation of an example start of data framing token.
FIG. 11 is a representation of data transmitted according to another example of a shared memory link.
FIG. 12 illustrates a simplified block diagram of an embodiment of an example system including a shared memory controller.
FIGS. 13A-13C illustrate simplified block diagrams of a system including multiple shared memory controllers.
FIG. 14 illustrates a flow diagram for updating a backup copy of a line of memory.
FIG. 15 illustrates a simplified block diagram of a system including multiple shared memory controllers.
FIG. 16 illustrates a flow diagram for updating a parity value for use in replicating a line of memory.
FIGS. 17A-17B are flowcharts illustrating example techniques in connection with routing transactions within a shared memory architecture.
FIG. 18 illustrates an embodiment of a block diagram for a computing system including a multicore processor.

Like reference numbers and designations in the various drawings indicate like elements.

### DETAILED DESCRIPTION

The invention is defined by independent claim 1. Further preferred embodiments are defined in the dependent claims.

In the following description, numerous specific details are set forth, such as examples of specific types of processors and system configurations, specific hardware structures, specific architectural and micro architectural details, specific register configurations, specific instruction types, specific system components, specific measurements/heights, specific processor pipeline stages and operation etc. in order to provide a thorough understanding of the present invention. It will be apparent, however, to one skilled in the art that these specific details need not be employed to practice the present invention. In other instances, well known components or methods, such as specific and alternative processor architectures, specific logic circuits/code for described algorithms, specific firmware code, specific interconnect operation, specific logic configurations, specific manufacturing techniques and materials, specific compiler implementations, specific expression of algorithms in code, specific power down and gating techniques/logic and other specific operational details of computer system haven't been described in detail in order to avoid unnecessarily obscuring the present invention.

Although the following embodiments may be described with reference to energy conservation and energy efficiency in specific integrated circuits, such as in computing platforms or microprocessors, other embodiments are applicable to other types of integrated circuits and logic devices. Similar techniques and teachings of embodiments described herein may be applied to other types of circuits or semiconductor devices that may also benefit from better energy efficiency and energy conservation. For example, the disclosed embodiments are not limited to desktop computer systems or Ultrabooks™. And may be also used in other devices, such as handheld devices, tablets, other thin notebooks, systems on a chip (SOC) devices, and embedded applications. Some examples of handheld devices include cellular phones, Internet protocol devices, digital cameras, personal digital assistants (PDAs), and handheld PCs. Embedded applications typically include a microcontroller, a digital signal processor (DSP), a system on a chip, network computers (NetPC), set-top boxes, network hubs, wide area network (WAN) switches, or any other system that can perform the functions and operations taught below. Moreover, the apparatus', methods, and systems described herein are not limited to physical computing devices, but may also relate to software optimizations for energy conservation and efficiency. As will become readily apparent in the description below, the embodiments of methods, apparatus', and systems described herein (whether in reference to hardware, firmware, software, or a combination thereof) are vital to a 'green technology' future balanced with performance considerations.

As computing systems are advancing, the components therein are becoming more complex. As a result, the interconnect architecture to couple and communicate between the components is also increasing in complexity to ensure bandwidth requirements are met for optimal component operation. Furthermore, different market segments demand different aspects of interconnect architectures to suit the market's needs. For example, servers require higher performance, while the mobile ecosystem is sometimes able to sacrifice overall performance for power savings. Yet, it's a singular purpose of most fabrics to provide highest possible performance with maximum power saving. Below, a number of interconnects are discussed, which would potentially benefit from aspects of the invention described herein.

One interconnect fabric architecture includes the Peripheral Component Interconnect (PCI) Express (PCIe) architecture. A primary goal of PCIe is to enable components and devices from different vendors to inter-operate in an open architecture, spanning multiple market segments; Clients (Desktops and Mobile), Servers (Standard and Enterprise), and Embedded and Communication devices. PCI Express is a high performance, general purpose I/O interconnect defined for a wide variety of future computing and communication platforms. Some PCI attributes, such as its usage model, load-store architecture, and software interfaces, have been maintained through its revisions, whereas previous parallel bus implementations have been replaced by a highly scalable, fully serial interface. The more recent versions of PCI Express take advantage of advances in point-to-point interconnects, Switch-based technology, and packetized protocol to deliver new levels of performance and features. Power Management, Quality Of Service (QoS), Hot-Plug/Hot-Swap support, Data Integrity, and Error Handling are among some of the advanced features supported by PCI Express.

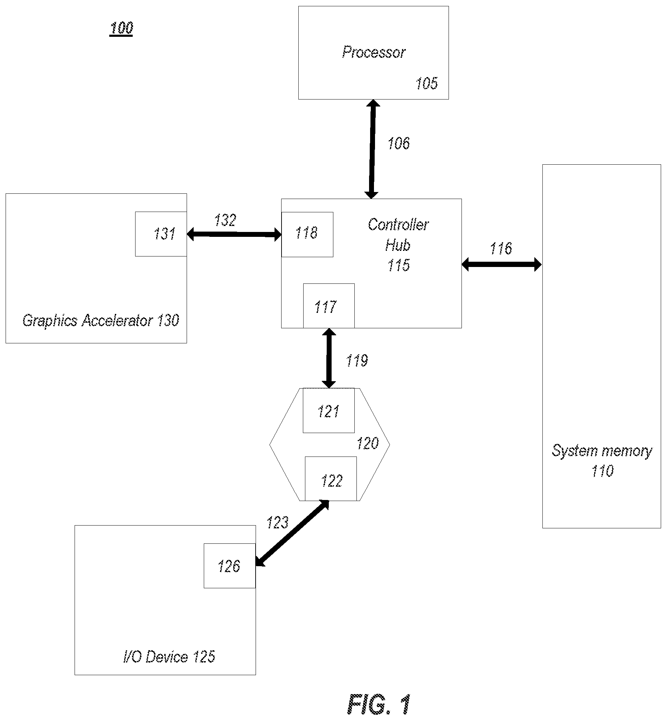

Referring to FIG. 1, an embodiment of a fabric composed of point-to-point Links that interconnect a set of components is illustrated. System 100 includes processor 105 and system memory 110 coupled to controller hub 115. Processor 105 includes any processing element, such as a microprocessor, a host processor, an embedded processor, a coprocessor, or other processor. Processor 105 is coupled to controller hub 115 through frontside bus (FSB) 106. In one embodiment, FSB 106 is a serial point-to-point interconnect as described below. In another embodiment, link 106 includes a serial, differential interconnect architecture that is compliant with different interconnect standard.

System memory 110 includes any memory device, such as random access memory (RAM), non-volatile (NV) memory, or other memory accessible by devices in system 100. System memory 110 is coupled to controller hub 115 through memory interface 116. Examples of a memory interface include a double-data rate (DDR) memory interface, a dual-channel DDR memory interface, and a dynamic RAM (DRAM) memory interface.

In one embodiment, controller hub 115 is a root hub, root complex, or root controller in a Peripheral Component Interconnect Express (PCIe or PCIE) interconnection hierarchy. Examples of controller hub 115 include a chipset, a memory controller hub (MCH), a northbridge, an interconnect controller hub (ICH) a southbridge, and a root controller/hub. Often the term chipset refers to two physically separate controller hubs, i.e. a memory controller hub (MCH) coupled to an interconnect controller hub (ICH). Note that current systems often include the MCH integrated with processor 105, while controller 115 is to communicate with I/O devices, in a similar manner as described below. In some embodiments, peer-to-peer routing is optionally supported through root complex 115.

Here, controller hub 115 is coupled to switch/bridge 120 through serial link 119. Input/output modules 117 and 121, which may also be referred to as interfaces/ports 117 and 121, include/implement a layered protocol stack to provide communication between controller hub 115 and switch 120. In one embodiment, multiple devices are capable of being coupled to switch 120.

Switch/bridge 120 routes packets/messages from device 125 upstream, i.e. up a hierarchy towards a root complex, to controller hub 115 and downstream, i.e. down a hierarchy away from a root controller, from processor 105 or system memory 110 to device 125. Switch 120, in one embodiment, is referred to as a logical assembly of multiple virtual PCI-to-PCI bridge devices. Device 125 includes any internal or external device or component to be coupled to an electronic system, such as an I/O device, a Network Interface Controller (NIC), an add-in card, an audio processor, a network processor, a hard-drive, a storage device, a CD/DVD ROM, a monitor, a printer, a mouse, a keyboard, a router, a portable storage device, a Firewire device, a Universal Serial Bus (USB) device, a scanner, and other input/output devices. Often in the PCIe vernacular, such as device, is referred to as an endpoint. Although not specifically shown, device 125 may include a PCIe to PCI/PCI-X bridge to support legacy or other version PCI devices. Endpoint devices in PCIe are often classified as legacy, PCIe, or root complex integrated endpoints.

Graphics accelerator 130 is also coupled to controller hub 115 through serial link 132. In one embodiment, graphics accelerator 130 is coupled to an MCH, which is coupled to an ICH. Switch 120, and accordingly I/O device 125, is then coupled to the ICH. I/O modules 131 and 118 are also to implement a layered protocol stack to communicate between graphics accelerator 130 and controller hub 115. Similar to the MCH discussion above, a graphics controller or the graphics accelerator 130 itself may be integrated in processor 105.

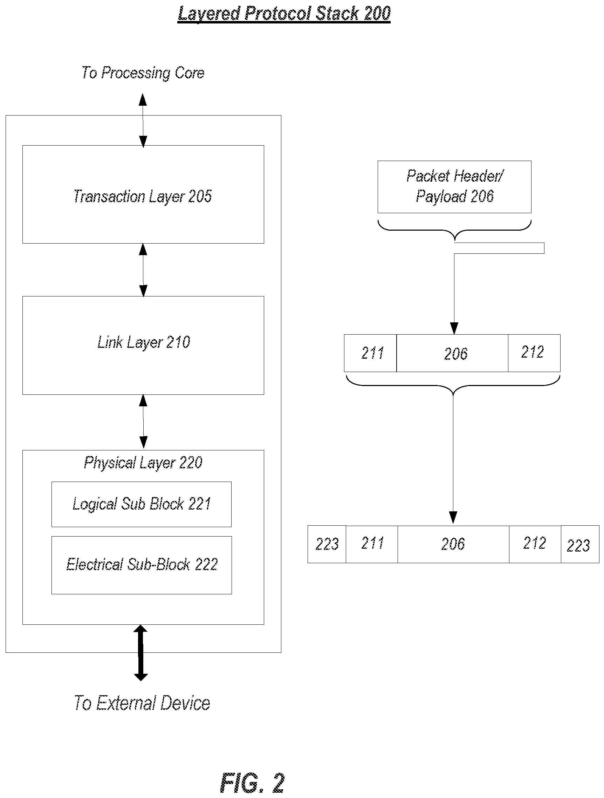

Turning to FIG. 2 an embodiment of a layered protocol stack is illustrated. Layered protocol stack 200 includes any form of a layered communication stack, such as a Quick Path Interconnect (QPI) stack, a PCie stack, a next generation high performance computing interconnect stack, or other layered stack. Although the discussion immediately below in reference to FIGS. 1-4 are in relation to a PCIe stack, the same concepts may be applied to other interconnect stacks. In one embodiment, protocol stack 200 is a PCIe protocol stack including transaction layer 205, link layer 210, and physical layer 220. An interface, such as interfaces 117, 118, 121, 122, 126, and 131 in FIG. 1, may be represented as communication protocol stack 200. Representation as a communication protocol stack may also be referred to as a module or interface implementing/including a protocol stack.

PCI Express uses packets to communicate information between components. Packets are formed in the Transaction Layer 205 and Data Link Layer 210 to carry the information from the transmitting component to the receiving component. As the transmitted packets flow through the other layers, they are extended with additional information necessary to handle packets at those layers. At the receiving side the reverse process occurs and packets get transformed from their Physical Layer 220 representation to the Data Link Layer 210 representation and finally (for Transaction Layer Packets) to the form that can be processed by the Transaction Layer 205 of the receiving device.

### Transaction Layer

In one embodiment, transaction layer 205 is to provide an interface between a device's processing core and the interconnect architecture, such as data link layer 210 and physical layer 220. In this regard, a primary responsibility of the transaction layer 205 is the assembly and disassembly of packets (i.e., transaction layer packets, or TLPs). The transaction layer 205 typically manages credit-base flow control for TLPs. PCIe implements split transactions, i.e. transactions with request and response separated by time, allowing a link to carry other traffic while the target device gathers data for the response.

In addition PCIe utilizes credit-based flow control. In this scheme, a device advertises an initial amount of credit for each of the receive buffers in Transaction Layer 205. An external device at the opposite end of the link, such as controller hub 115 in FIG. 1, counts the number of credits consumed by each TLP. A transaction may be transmitted if the transaction does not exceed a credit limit. Upon receiving a response an amount of credit is restored. An advantage of a credit scheme is that the latency of credit return does not affect performance, provided that the credit limit is not encountered.

In one embodiment, four transaction address spaces include a configuration address space, a memory address space, an input/output address space, and a message address space. Memory space transactions include one or more of read requests and write requests to transfer data to/from a memory-mapped location. In one embodiment, memory space transactions are capable of using two different address formats, e.g., a short address format, such as a 32-bit address, or a long address format, such as 64-bit address. Configuration space transactions are used to access configuration space of the PCIe devices. Transactions to the configuration space include read requests and write requests. Message space transactions (or, simply messages) are defined to support in-band communication between PCIe agents.

Therefore, in one embodiment, transaction layer 205 assembles packet header/payload 206. Format for current packet headers/payloads may be found in the PCIe specification at the PCIe specification website.

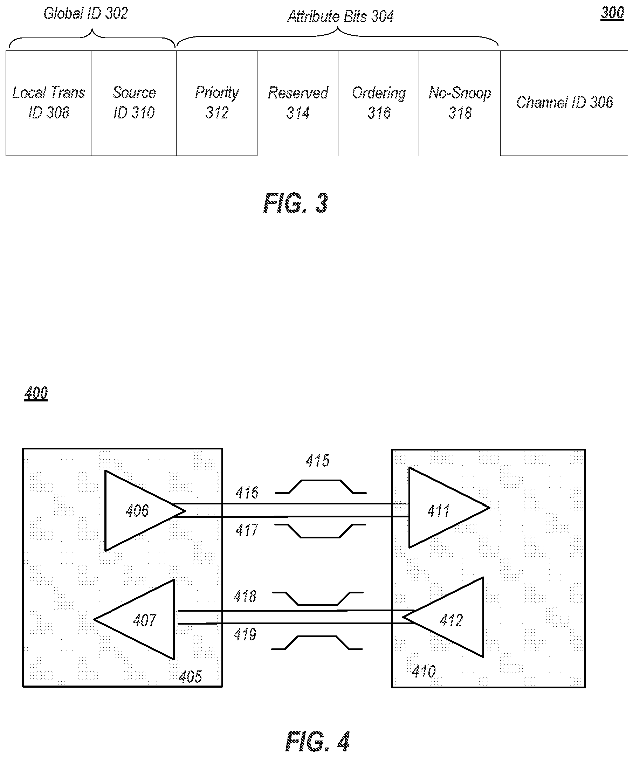

Quickly referring to FIG. 3, an embodiment of a PCIe transaction descriptor is illustrated. In one embodiment, transaction descriptor 300 is a mechanism for carrying transaction information. In this regard, transaction descriptor 300 supports identification of transactions in a system. Other potential uses include tracking modifications of default transaction ordering and association of transaction with channels.

Transaction descriptor 300 includes global identifier field 302, attributes field 304 and channel identifier field 306. In the illustrated example, global identifier field 302 is depicted comprising local transaction identifier field 308 and source identifier field 310. In one embodiment, global transaction identifier 302 is unique for all outstanding requests.

According to one implementation, local transaction identifier field 308 is a field generated by a requesting agent, and it is unique for all outstanding requests that require a completion for that requesting agent. Furthermore, in this example, source identifier 310 uniquely identifies the requestor agent within a PCIe hierarchy. Accordingly, together with source ID 310, local transaction identifier 308 field provides global identification of a transaction within a hierarchy domain.

Attributes field 304 specifies characteristics and relationships of the transaction. In this regard, attributes field 304 is potentially used to provide additional information that allows modification of the default handling of transactions. In one embodiment, attributes field 304 includes priority field 312, reserved field 314, ordering field 316, and no-snoop field 318. Here, priority sub-field 312 may be modified by an initiator to assign a priority to the transaction. Reserved attribute field 314 is left reserved for future, or vendor-defined usage. Possible usage models using priority or security attributes may be implemented using the reserved attribute field.

In this example, ordering attribute field 316 is used to supply optional information conveying the type of ordering that may modify default ordering rules. According to one example implementation, an ordering attribute of "0" denotes default ordering rules are to apply, wherein an ordering attribute of "1" denotes relaxed ordering, wherein writes can pass writes in the same direction, and read completions can pass writes in the same direction. Snoop attribute field 318 is utilized to determine if transactions are snooped. As shown, channel ID Field 306 identifies a channel that a transaction is associated with.

### Link Layer

Link layer 210, also referred to as data link layer 210, acts as an intermediate stage between transaction layer 205 and the physical layer 220. In one embodiment, a responsibility of the data link layer 210 is providing a reliable mechanism for exchanging Transaction Layer Packets (TLPs) between two components a link. One side of the Data Link Layer 210 accepts TLPs assembled by the Transaction Layer 205, applies packet sequence identifier 211, i.e. an identification number or packet number, calculates and applies an error detection code, i.e. CRC 212, and submits the modified TLPs to the Physical Layer 220 for transmission across a physical to an external device.

### Physical Layer

In one embodiment, physical layer 220 includes logical sub block 221 and electrical sub-block 222 to physically transmit a packet to an external device. Here, logical sub-block 221 is responsible for the "digital" functions of Physical Layer 221. In this regard, the logical sub-block includes a transmit section to prepare outgoing information for transmission by physical sub-block 222, and a receiver section to identify and prepare received information before passing it to the Link Layer 210.

Physical block 222 includes a transmitter and a receiver. The transmitter is supplied by logical sub-block 221 with symbols, which the transmitter serializes and transmits onto to an external device. The receiver is supplied with serialized symbols from an external device and transforms the received signals into a bit-stream. The bit-stream is deserialized and supplied to logical sub-block 221. In one embodiment, an 8b/10b transmission code is employed, where ten-bit symbols are transmitted/received. Here, special symbols are used to frame a packet with frames 223. In addition, in one example, the receiver also provides a symbol clock recovered from the incoming serial stream.

As stated above, although transaction layer 205, link layer 210, and physical layer 220 are discussed in reference to a specific embodiment of a PCIe protocol stack, a layered protocol stack is not so limited. In fact, any layered protocol may be included/implemented. As an example, an port/interface that is represented as a layered protocol includes: (1) a first layer to assemble packets, i.e. a transaction layer; a second layer to sequence packets, i.e. a link layer; and a third layer to transmit the packets, i.e. a physical layer. As a specific example, a common standard interface (CSI) layered protocol is utilized.

Referring next to FIG. 4, an embodiment of a PCIe serial point to point fabric is illustrated. Although an embodiment of a PCIe serial point-to-point link is illustrated, a serial point-to-point link is not so limited, as it includes any transmission path for transmitting serial data. In the embodiment shown, a basic PCIe link includes two, low-voltage, differentially driven signal pairs: a transmit pair 406/411 and a receive pair 412/407. Accordingly, device 405 includes transmission logic 406 to transmit data to device 410 and receiving logic 407 to receive data from device 410. In other words, two transmitting paths, i.e. paths 416 and 417, and two receiving paths, i.e. paths 418 and 419, are included in a PCIe link.

A transmission path refers to any path for transmitting data, such as a transmission line, a copper line, an optical line, a wireless communication channel, an infrared communication link, or other communication path. A connection between two devices, such as device 405 and device 410, is referred to as a link, such as link 415. A link may support one lane - each lane representing a set of differential signal pairs (one pair for transmission, one pair for reception). To scale bandwidth, a link may aggregate multiple lanes denoted by xN, where N is any supported Link width, such as 1, 2, 4, 8, 12, 16, 20, 24, 32, 64, or wider.

A differential pair refers to two transmission paths, such as lines 416 and 417, to transmit differential signals. As an example, when line 416 toggles from a low voltage level to a high voltage level, i.e. a rising edge, line 417 drives from a high logic level to a low logic level, i.e. a falling edge. Differential signals potentially demonstrate better electrical characteristics, such as better signal integrity, i.e. cross-coupling, voltage overshoot/undershoot, ringing, etc. This allows for better timing window, which enables faster transmission frequencies.

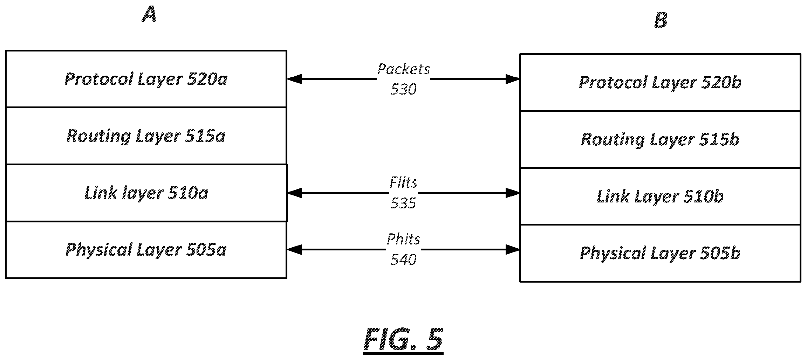

In one implementation, as shown in FIG.5, Physical layer 505a,b can be responsible for the fast transfer of information on the physical medium (electrical or optical etc.). The physical link can be point-to-point between two Link layer entities, such as layer 505a and 505b. The Link layer 510a,b can abstract the Physical layer 505a,b from the upper layers and provides the capability to reliably transfer data (as well as requests) and manage flow control between two directly connected entities. The Link Layer can also be responsible for virtualizing the physical channel into multiple virtual channels and message classes. The Protocol layer 520a,b relies on the Link layer 510a,b to map protocol messages into the appropriate message classes and virtual channels before handing them to the Physical layer 505a,b for transfer across the physical links. Link layer 510a,b may support multiple messages, such as a request, snoop, response, writeback, non-coherent data, among other examples.

A Physical layer 505a,b (or PHY) can be implemented above the electrical layer (i.e. electrical conductors connecting two components) and below the link layer 510a,b, as illustrated in FIG. 5. The Physical layer and corresponding logic can reside on each agent and connect the link layers on two agents or nodes (A and B) separated from each other (e.g. on devices on either side of a link). The local and remote electrical layers are connected by physical media (e.g. wires, conductors, optical, etc.). The Physical layer 505a,b, in one embodiment, has two major phases, initialization and operation. During initialization, the connection is opaque to the link layer and signaling may involve a combination of timed states and handshake events. During operation, the connection is transparent to the link layer and signaling is at a speed, with all lanes operating together as a single link. During the operation phase, the Physical layer transports flits 535 from agent A to agent B and from agent B to agent A. The connection is also referred to as a link and abstracts some physical aspects including media, width and speed from the link layers while exchanging flits and control/status of current configuration (e.g. width) with the link layer. The initialization phase includes minor phases e.g. Polling, Configuration. The operation phase also includes minor phases (e.g. link power management states).

In one embodiment, Link layer 510a,b can be implemented so as to provide reliable data transfer between two protocol or routing entities. The Link layer can abstract Physical layer 505a,b from the Protocol layer 520a,b, and can be responsible for the flow control between two protocol agents (A, B), and provide virtual channel services to the Protocol layer (Message Classes) and Routing layer (Virtual Networks). The interface between the Protocol layer 520a,b and the Link Layer 510a,b can typically be at the packet level. In one embodiment, the smallest transfer unit at the Link Layer is referred to as a flit which a specified number of bits, such as 192 bits or some other denomination. The Link Layer 510a,b relies on the Physical layer 505a,b to frame the Physical layer's 505a,b unit of transfer (phit 540) into the Link Layer's 510a,b unit of transfer (flit). In addition, the Link Layer 510a,b may be logically broken into two parts, a sender and a receiver. A sender/receiver pair on one entity may be connected to a receiver/sender pair on another entity. Flow Control is often performed on both a flit and a packet basis. Error detection and correction is also potentially performed on a flit level basis.

In one embodiment, Routing layer 515a,b can provide a flexible and distributed method to route transactions from a source to a destination. The scheme is flexible since routing algorithms for multiple topologies may be specified through programmable routing tables at each router (the programming in one embodiment is performed by firmware, software, or a combination thereof). The routing functionality may be distributed; the routing may be done through a series of routing steps, with each routing step being defined through a lookup of a table at either the source, intermediate, or destination routers. The lookup at a source may be used to inject a packet into the fabric. The lookup at an intermediate router may be used to route an packet from an input port to an output port. The lookup at a destination port may be used to target the destination protocol agent. Note that the Routing layer, in some implementations, can be thin since the routing tables, and, hence the routing algorithms, are not specifically defined by specification. This allows for flexibility and a variety of usage models, including flexible platform architectural topologies to be defined by the system implementation. The Routing layer 515a,b relies on the Link layer 510a,b for providing the use of up to three (or more) virtual networks (VNs) - in one example, two deadlock-free VNs, VN0 and VN1 with several message classes defined in each virtual network. A shared adaptive virtual network (VNA) may be defined in the Link layer, but this adaptive network may not be exposed directly in routing concepts, since each message class and virtual network may have dedicated resources and guaranteed forward progress, among other features and examples.

In one embodiment, Protocol Layer 520a,b can provide a Coherence Protocol to support agents caching lines of data from memory. An agent wishing to cache memory data may use the coherence protocol to read the line of data to load into its cache. An agent wishing to modify a line of data in its cache may use the coherence protocol to acquire ownership of the line before modifying the data. After modifying a line, an agent may follow protocol requirements of keeping it in its cache until it either writes the line back to memory or includes the line in a response to an external request. Lastly, an agent may fulfill external requests to invalidate a line in its cache. The protocol ensures coherency of the data by dictating the rules all caching agents may follow. It also provides the means for agents without caches to coherently read and write memory data.

Physical layers of existing interconnect and communication architectures, including PCIe, can be leveraged to provide shared memory and I/O services within a system. Traditionally, cacheable memory cannot be shared between independent systems using traditional load/store (LD/ST) memory semantics. An independent system, or "node", can be independent in the sense that it functions as a single logical entity, is controlled by a single operating system (and/or single BIOS or Virtual Machine Monitor (VMM)), and/or has an independent fault domain. A single node can include one or multiple processor devices, be implemented on a single board or multiple boards, and include local memory, including cacheable memory that can be accessed using LD/ST semantics by the devices on the same node. Within a node, shared memory can include one or more blocks of memory, such as a random access memory (RAM), that can be accessed by several different processors (e.g., central processing units (CPUs)) within a node. Shared memory can also include the local memory of the processors or other devices in the node. The multiple devices within a node having shared memory can share a single view of data within the shared memory. I/O communication involving shared memory can be very low latency and allow quick access to the memory by the multiple processors.

Traditionally, memory sharing between different nodes has not allowed memory sharing according to a load/store paradigm. For instance, in some systems, memory sharing between different nodes has been facilitated through distributed memory architectures. In traditional solutions, computational tasks operate on local data, and if data of another node is desired, the computational task (e.g., executed by another CPU node) communicates with the other node, for instance, over a communication channel utilizing a communication protocol stack, such as Ethernet, InfiniBand, or another layered protocol. In traditional multi-node systems, the processors of different nodes do not have to be aware where data resides. Sharing data using traditional approaches, such as over a protocol stack, can have a significantly higher latency than memory sharing within a node using a load/store paradigm. Rather than directly addressing and operating on data in shared memory, one node can request data from another using an existing protocol handshake such as Ethernet (or Infiniband), and the source node can provide the data, such that the data can be stored and operated on by the requesting node, among other examples.

In some implementations, a shared memory architecture can be provided that allows memory to be shared between independent nodes for exclusive or shared access using load/store (LD/ST) memory semantics. In one example, memory semantics (and directory information, if applicable) along with I/O semantics (for protocols such as PCIe) can be exported on either a common set of pins or a separate set of pins. In such a system, the improved shared memory architecture can each of a plurality of nodes in a system to maintain its own independent fault domain (and local memory), while enabling a shared memory pool for access by the nodes and low-latency message passing between nodes using memory according to LD/ST semantics. In some implementations, such a shared memory pool can be dynamically (or statically) allocated between different nodes. Accordingly, one can also configure the various nodes of a system into dynamically changing groups of nodes to work cooperatively and flexibly on various tasks making use of the shared memory infrastructure, for instance, as demand arises.

In some implementations, the shared memory architecture can be based on a buffered memory interface. The buffered memory interface, itself, can be based on a general purpose input/output (GPIO) interconnect interface and protocol. For instance, the physical and link layer definitions of the GPIO interconnect can also be implemented in the buffered memory protocol. Indeed, logic used to support the physical and link layers of the GPIO protocol can be reused at interfaces supporting the buffered memory protocol. The buffered memory protocol can also share message classes, such as a request, response, and writeback message class, among other examples. While opcode values within the buffered memory protocol message can be interpreted differently than in the GPIO protocol, the same general packet and flit formats can be utilized in both the buffered memory protocol and the GPIO interconnect upon which it is built.

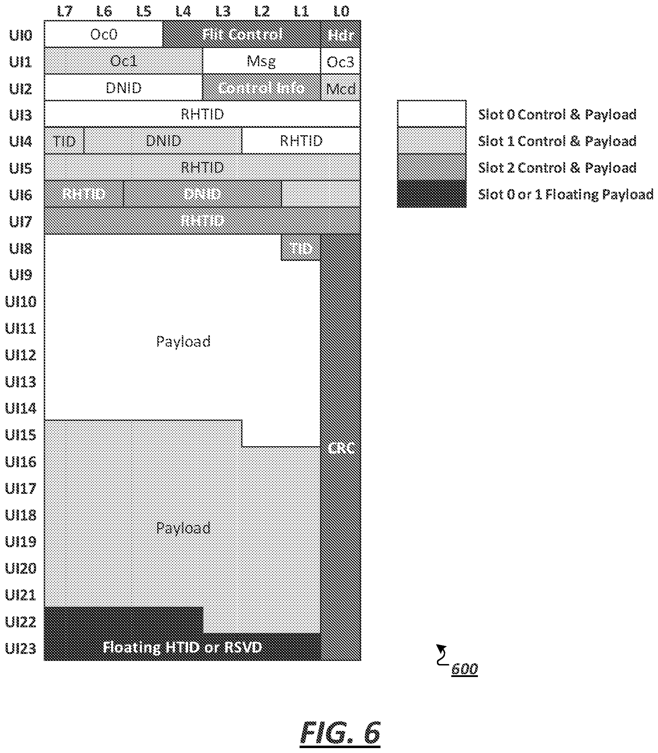

In one example, a flit format can be defined for flits to be sent between agents in the GPIO protocol. FIG. 6 illustrates a representation 600 of a generalized flit for an 8 lane link width. Each column of the representation 600 can symbolize a link lane and each row a respective unit interval (UI). In some implementations, a single flit can be subdivided into two or more slots. Distinct messages or link layer headers can be included in each slot, allowing multiple distinct, and in some cases, independent messages corresponding to potentially different transactions to be sent in a single flit. Further, the multiple messages included in slots of a single flit may also be destined to different destination nodes, among other examples. For instance, the example of FIG. 6 illustrates a flit format with three slots. The shaded portions can represent the portion of the flit included in a respective slot.

In the example of FIG. 6, three slots, Slots 0, 1, and 2, are provided. Slot 0 can be provided 72 bits of flit space, of which 22 bits are dedicated to message header fields and 50 bits to message payload space. Slot 1 can be provided with 70 bits of flit space, of which 20 bits are dedicated to message header fields and 50 bits to message payload space. The difference in message header field space between can be optimized to provide that certain message types will be designated for inclusion in Slot 0 (e.g., where more message header encoding is utilized). A third slot, Slot 2, can be provided that occupies substantially less space than Slots 0 and 1, in this case utilizing 18 bits of flit space. Slot 2 can be optimized to handle those messages, such as acknowledges, credit returns, and the like that do no utilize larger message payloads. Additionally, a floating payload field can be provided that allows an additional 11 bits to be alternatively applied to supplement the payload field of either Slot 0 or Slot 1.

Continuing with the specific example of FIG. 6, other fields can be global to a flit (i.e., apply across the flit and not to a particular slot). For instance, a header bit can be provided together with a 4-bit flit control field that can be used to designate such information as a virtual network of the flit, identify how the flit is to be encoded, among other examples. Additionally, error control functionality can be provided, such as through a 16-bit cyclic CRC field, among other potential examples.

In the example of FIG. 6, a "Hdr" field can be provided for the flit generally and represent a header indication for the flit. In some instances, the Hdr field can indicate whether the flit is a header flit or a data flit. In data flits, the flit can still remain slotted, but omit or replace the use of certain fields with payload data. In some cases, data fields may include an opcode and payload data. In the case of header flits, a variety of header fields can be provided. In the example of FIG. 6, "Oc" fields can be provided for each slot, the Oc field representing an opcode. Similarly, one or more slots can have a corresponding "msg" field representing a message type of the corresponding packet to be included in the slot, provided the slot is designed to handle such packet types, etc. "DNID" fields can represent a Destination Node ID, a "TID" field can represent a transaction or tracker ID, a "RHTID" field can represent either a requestor node ID or a home tracker ID, among other potential fields. Further, one or more slots can be provided with payload fields. Additionally, a CRC field can be included within a flit to provide a CRC value for the flit, among other examples.

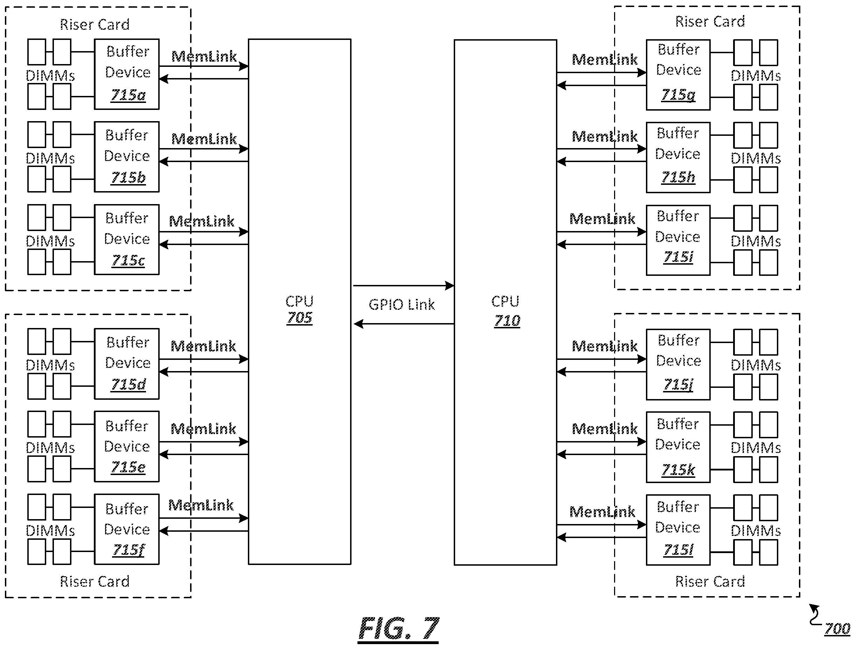

The multi-slotted flit of a GPIO protocol can be reused by a buffered memory protocol. FIG. 7 shows a simplified block diagram 700 illustrating an example topology of a computing system including CPU devices 705, 710 interconnected by a GPIO interconnect link. Each CPU 705, 710 can be likewise connected to one or more respective buffer devices 715a-1 using corresponding buffered memory protocol links ("MemLink"). Each buffer device can implement a memory controller for system memory of the system. As noted above, in some implementations, the buffered memory protocol interconnect can be based on the GPIO protocol, in that the physical and link layers of the buffered memory protocols are based on the same physical and link layer definitions of the GPIO protocol. Although not illustrated in FIG. 7, the CPUs 705, 710 can be further connected to one or more downstream devices using the GPIO protocol.

As further shown in the example of FIG. 7, buffer devices 715a-1 can be connected to memory devices, such as dual in-line memory module (DIMM) devices. The memory corresponding to each buffer device can be considered local to the CPU (e.g., 705, 701) to which the buffer device is connected. However, other devices (including the other CPU) can access the memory by other sockets using GPIO protocol-compliant links. In some implementations, a port running the buffered memory protocol may only support the commands for communicating with the memory and only support the buffered memory protocol (i.e., not the GPIO protocol and the buffered memory protocol). Additionally, in some implementations, the GPIO interconnect protocol may support routing and indicate such information (e.g., in its packets) such as the requesting and destination node identifiers. The buffered memory protocol, on the other hand, may be a point-to-point interface that does not utilize routing. As will be described in more detail, the buffered memory protocol can augmented to facilitate routing between memory controllers in a pooled memory architecture. Consequently, some fields used in the GPIO protocol may be dispensed with or augmented in packets sent using the buffered memory interfaces. Instead, fields can be designated for use in carrying address decode information from host to buffer, among other examples.

In further implementations, buffer devices 715a-1 can support a two level memory topology with some amount of fast memory (e.g., DRAM) serving as a cache for a larger, slower memory (e.g., non-volatile memory). In one such implementation, one or more of the buffer devices 715a-1 can use DDR as near, fast memory and transactional DDR DIMMs as the larger "far" memory, among other examples. Transactional DIMMs can utilize protocols (e.g., DDR-Transactional (DDR-T)) to communicate to a volatile memory single in-line memory module (SIMM) using transactional commands.

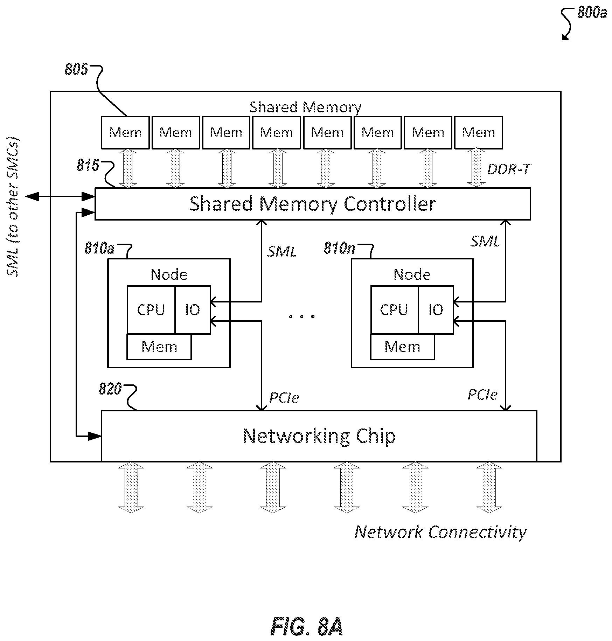

As noted, the buffered memory protocol and systems utilizing a buffered memory protocol (such as those illustrated above) can be extended to enable a shared memory architecture that allows memory to be shared between independent nodes for exclusive or shared access using load/store (LD/ST) memory semantics. Turning to FIG. 8A, a simplified block diagram 800a is shown illustrating an example system including shared, or pooled, memory 805 capable of being accessed using load/store techniques by each of a plurality of independent nodes 810a-810n. For instance, a shared memory controller 815 can be provided that can accept load/store access requests of the various nodes 810a-810n on the system. Shared memory 805 can be implemented utilizing synchronous dynamic random access memory (SDRAM), dual in-line memory modules (DIMM), and other non-volatile memory (or volatile memory).

Each node may itself have one or multiple CPU sockets and may also include local memory that remains insulated from LD/ST access by other nodes in the system. The node can communicate with other devices on the system (e.g., shared memory controller 815, networking controller 820, other nodes, etc.) using one or more protocols, including PCIe, QPI, Ethernet, among other examples. In some implementations, a shared memory link (SML) protocol can be provided through which low latency LD/ST memory semantics can be supported. SML can be used, for instance, in communicating reads and writes of shared memory 805 (through shared memory controller 815) by the various nodes 810a-810n of a system.

In one example, SML can be based on a memory access protocol, such as Scalable Memory Interconnect (SMI) 3rd generation (SMI3). Other memory access protocols can be alternatively used, such as transactional memory access protocols such as fully buffered DIMM (FB-DIMM), DDR Transactional (DDR-T), among other examples. In other instances, SML can be based on native PCIe memory read/write semantics with additional directory extensions. A memory-protocol-based implementation of SML can offer bandwidth efficiency advantages due to being tailored to cache line memory accesses. While high performance inter-device communication protocols exist, such as PCIe, upper layers (e.g., transaction and link layers) of such protocols can introduce latency that degrades application of the full protocol for use in LD/ST memory transactions, including transactions involving a shared memory 805. A memory protocol, such as SMI3, can allow a potential additional advantage of offering lower latency accesses since it can bypass most of another protocol stack, such as PCIe. Accordingly, implementations of SML can utilize SMI3 or another memory protocol running on a logical and physical PHY of another protocol, such as SMI3 on PCIe.

As noted, in some implementation, a shared memory controller (SMC) 815 can be provided that includes logic for handling load/store requests of nodes 810a-810n in the system. Load/store requests can be received by the SMC 815 over links utilizing SML and connecting the nodes 810a-810n to the SMC 815. In some implementations the SMC 815 can be implemented as a device, such as an application-specific integrated circuit (ASIC), including logic for servicing the access requests of the nodes 810a-810n for shared memory resources. In other instances, the SMC 815 (as well as shared memory 805) can reside on a device, chip, or board separate from one or more (or even all) of the nodes 810a-810n. The SMC 815 can further include logic to coordinate various nodes' transactions that involve shared memory 805. Additionally, the SMC can maintain a directory tracking access to various data resources, such as each cache line, included in shared memory 805. For instance, a data resource can be in a shared access state (e.g., capable of being accessed (e.g., loaded or read) by multiple processing and/or I/O devices within a node, simultaneously), an exclusive access state (e.g., reserved exclusively, if not temporarily, by a single processing and/or I/O device within a node (e.g., for a store or write operation), an uncached state, among other potential examples. Further, while each node may have direct access to one or more portions of shared memory 805, different addressing schemes and values may be employed by the various nodes (e.g., 810a-810n) resulting in the same shared memory data being referred to (e.g., in an instruction) by a first node according to a first address value and a second node being referring to the same data by a second address value. The SMC 815 can include logic, including data structures mapping nodes' addresses to shared memory resources, to allow the SMC 815 to interpret the various access requests of the various nodes.

Additionally, in some cases, some portion of shared memory (e.g., certain partitions, memory blocks, records, files, etc.) may be subject to certain permissions, rules, and assignments such that only a portion of the nodes 810a-810n are allowed (e.g., by the SMC 815) to access the corresponding data. Indeed, each shared memory resource may be assigned to a respective (and in some cases different) subset of the nodes 810a-810n of the system. These assignments can be dynamic and SMC 815 can modify such rules and permissions (e.g., on-demand, dynamically, etc.) to accommodate new or changed rules, permissions, node assignments and ownership applicable to a given portion of the shared memory 805.

An example SMC 815 can further track various transactions involving nodes (e.g., 810a-810n) in the system accessing one or more shared memory resources. For instance, SMC 815 can track information for each shared memory 805 transaction, including identification of the node(s) involved in the transaction, progress of the transaction (e.g., whether it has been completed), among other transaction information. This can permit some of the transaction-oriented aspects of traditional distributed memory architectures to be applied to the improved multi-node shared memory architecture described herein. Additionally, transaction tracking (e.g., by the SMC) can be used to assist in maintaining or enforcing the distinct and independent fault domains of each respective node. For instance, the SMC can maintain the corresponding Node ID for each transaction-in-progress in its internal data structures, including in memory, and use that information to enforce access rights and maintain individual fault-domains for each node. Accordingly, when one of the nodes goes down (e.g., due to a critical error, triggered recovery sequence, or other fault or event), only that node and its transactions involving the shared memory 805 are interrupted (e.g., dumped by the SMC)-transactions of the remaining nodes that involve the shared memory 805 continue on independent of the fault in the other node.

A system can include multiple nodes. Additionally, some example systems can include multiple SMCs. In some cases, a node may be able to access shared memory off a remote SMC to which it is not directly attached to (i.e., the node's local SMC connects to the remote SMC through one or multiple SML Link hops). The remote SMC may be in the same board or could be in a different board. In some cases, some of the nodes may be off-system (e.g., off board or off chip) but nonetheless access shared memory 805. For instance, one or more off-system nodes can connect directly to the SMC using an SML-compliant link, among other examples. Additionally, other systems that include their own SMC and shared memory can also connect with the SMC 810 to extend sharing of memory 805 to nodes included, for instance, on another board that interface with the other SMC connected to the SMC over an SML link. Still further, network connections can be tunneled through to further extend access to other off-board or off-chip nodes. For instance, SML can tunnel over an Ethernet connection (e.g., provided through network controller 820) communicatively coupling the example system of FIG. 8A with another system that can also include one or more other nodes and allow these nodes to also gain access to SMC 815 and thereby shared memory 805, among other examples.

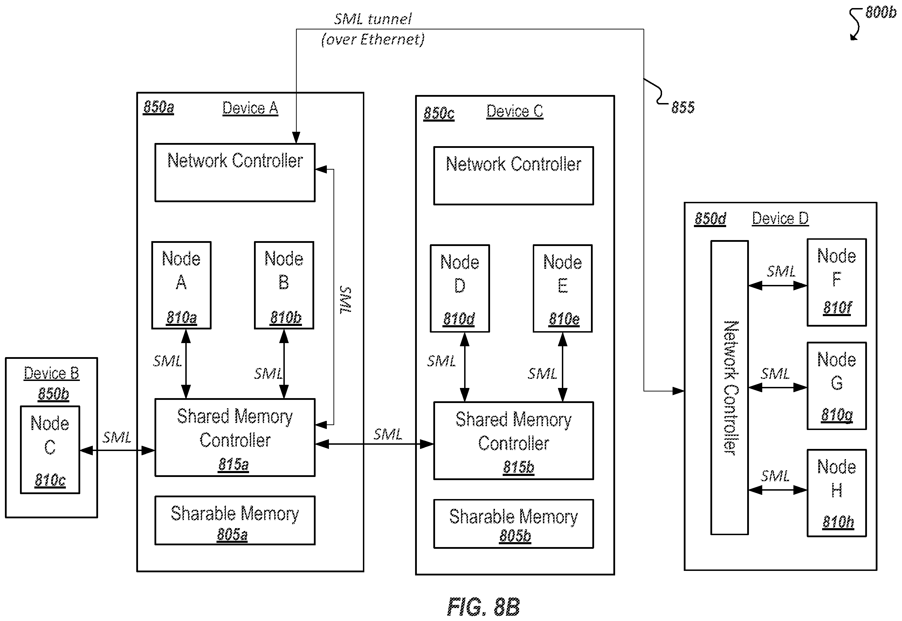

As another example, as shown in the simplified block diagram 800b of FIG. 8B, an improved shared memory architecture permitting shared access by multiple independent nodes according to a LD/ST memory semantic can flexibly allow for the provision of a variety of different multi-node system designs. Various combinations of the multiple nodes can be assigned to share portions of one or more shared memory blocks provided in an example system. For instance, another example system shown in the example of FIG. 8B, can include multiple devices 850a-850d implemented, for instance, as separate dies, boards, chips, etc., each device including one or more independent CPU nodes (e.g., 810a-810h). Each node can include its own local memory. One or more of the multiple devices 850a-850d can further include shared memory that can be accessed by two or more of the nodes 810a-810h of the system.

The system illustrated in FIG. 8B is an example provided to illustrate some of the variability that can be realized through an improved shared memory architecture, such as shown and described herein. For instance, each of a Device A 850a and Device C 850c can include a respective shared memory element (e.g., 805a, 805b). Accordingly, in some implementations, each shared memory element on a distinct device may further include a respective shared memory controller (SMC) 815a, 815b. Various combinations of nodes 810a-810h can be communicatively coupled to each SMC (e.g., 815a, 815b) allowing the nodes to access the corresponding shared memory (e.g., 805a, 805b). As an example, SMC 815a of Device A 850a can connect to nodes 810a, 810b on Device A using a direct data link supporting SML. Additionally, another node 810c on another device (e.g., Device C 850c) can also have access to the shared memory 805a by virtue of a direct, hardwired connection (supporting SML) from the node 810c (and/or its device 850c) to SMC 815a. Indirect, network-based, or other such connections can also be used to allow nodes (e.g., 810f-810h) of a remote or off-board device (e.g., Device D 850d) to utilize a conventional protocol stack to interface with SMC 815a to also have access to shared memory 805a. For instance, an SML tunnel 855 can be established over an Ethernet, InfiniBand, or other connection coupling Device A and Device D. While establishing and maintaining the tunnel can introduce some additional overhead and latency, compared to SML running on other less-software-managed physical connections, the SML tunnel 855 when established can operate as other SML channels and allow the nodes 810f-810h to interface with SMC 815a over SML and access shared memory 805a as any other node communicating with SMC over an SML link can. For instance, reliability and ordering of the packets in the SML channels can be enforced either by the networking components in the system or it can be enforced end-to-end between the SMCs.

In still other examples, nodes (e.g., 815d, 815e) on a device different from that hosting a particular portion of shared memory (e.g., 805a) can connect indirectly to the corresponding SMC (e.g., SMC 815a) by connecting directly to another SMC (e.g., 815b) that is itself coupled (e.g., using an SML link) to the corresponding SMC (e.g., 815a). Linking two or more SMCs (e.g., 815a, 815b) can effectively expand the amount of shared memory available to the nodes 810a-810h on the system. For instance, by virtue of a link between SMCs 815a, 815b in the example of FIG. 8B, in some implementations, any of the nodes (e.g., 810a-810c, 810f-810h) capable of accessing shared memory 805a through SMC 815a may also potentially access sharable memory 805b by virtue of the connection between SMC 815a and SMC 815b. Likewise, in some implementations, each of the nodes directly accessing SMC 815b can also access sharable memory 805a by virtue of the connection between the SMCs 815a, 815b, among other potential examples.

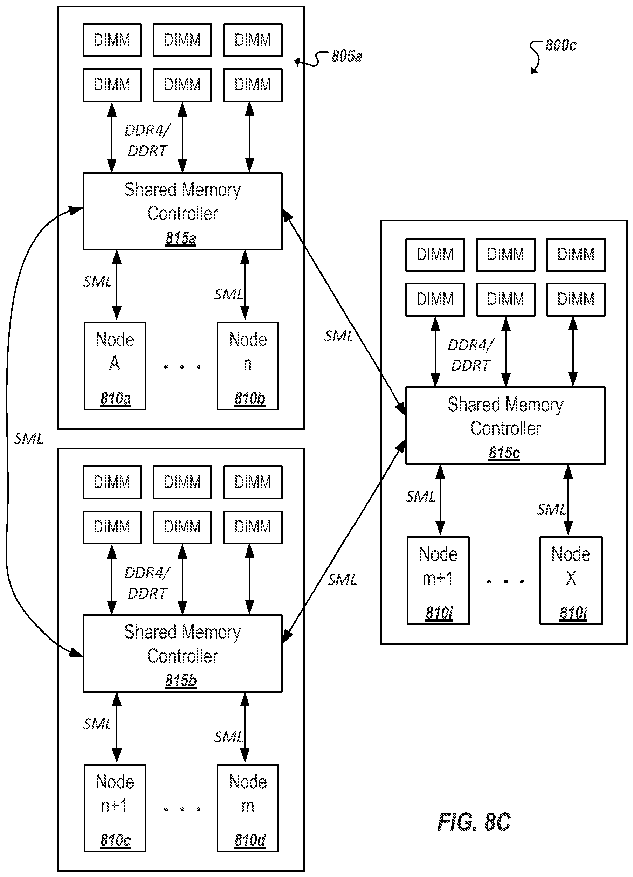

As noted, independent nodes can each access shared memory, including shared memory included in memory not connected to the SMC to which the node is directly connected. The shared memory is effectively pooled. While a traditional buffered memory protocol can assume point-to-point communication, the pooling of shared memory and joint management of this memory by multiple SMCs can involve packets and flits relating to this memory to traverse multiple hops and SMCs before they arrive to their intended destination. In this respect, the multiple SMCs can form a network of SMCs and each SMC can include logic for determining how to route a particular flit from its directly connected nodes to the SMC connected to the memory addressed by the flit. For instance, in FIG. 8C, an example 800c is shown of multiple SMCs 815a-c interconnected with each other SMC by one or more SML links. Each SMC can be connected to a subset of the processor nodes in the system. Further, each SMC can directly connect to and provide access to a respective subset of the memory elements that compose the shared memory pool. As an example, SMC 815a can connect to nodes 810a, 810b and shared memory elements (e.g., 805a). Another node 810i can access a line of memory stored in shared memory portion 805a by sending a request to SMC 815c which can route the request, over an SML link to SMC 815a. SMC 815a can manage a memory action in connection with the request and respond, in some cases, by providing read data, an acknowledgement, or other information to the node 810i by routing the response over an SML link to SMC 815c. Instead of routing SML communications directly between SMC 815a and 815c, in other instances, the communications can additionally be routed over other SMCs (e.g., 815b). Accordingly, each SMC in a shared memory architecture can include routing logic, implemented in hardware and/or software to facilitate routing communications between SMCs within the network.

As noted above, an improved shared memory architecture can include a low-latency link protocol (i.e., SML) based on a memory access protocol, such as SMI3, and provided to facilitate load/store requests involving the shared memory. Whereas traditional SMI3 and other memory access protocols may be configured for use in memory sharing within a single node, SML can extend memory access semantics to multiple nodes to allow memory sharing between the multiple nodes. Further, SML can potentially be utilized on any physical communication link. SML can utilize a memory access protocol supporting LD/ST memory semantics that is overlaid on a physical layer (and corresponding physical layer logic) adapted to interconnect distinct devices (and nodes). Additionally, physical layer logic of SML can provide for no packet dropping and error retry functionality, among other features.

In some implementations, SML can be can be implemented by overlaying SMI3 on a PCIe PHY. An SML link layer can be provided (e.g., in lieu of a traditional PCIe link layer) to forego flow control and other features and facilitate lower latency memory access such as would be characteristic in traditional CPU memory access architectures. In one example, SML link layer logic can multiplex between shared memory transactions and other transactions. For instance, SML link layer logic can multiplex between SMI3 and PCIe transactions. For instance, SMI3 (or another memory protocol) can overlay on top of PCIe (or another interconnect protocol) so that the link can dynamically switch between SMI3 and PCIe transactions. This can allow traditional PCIe traffic to effectively coexist on the same link as SML traffic in some instances.

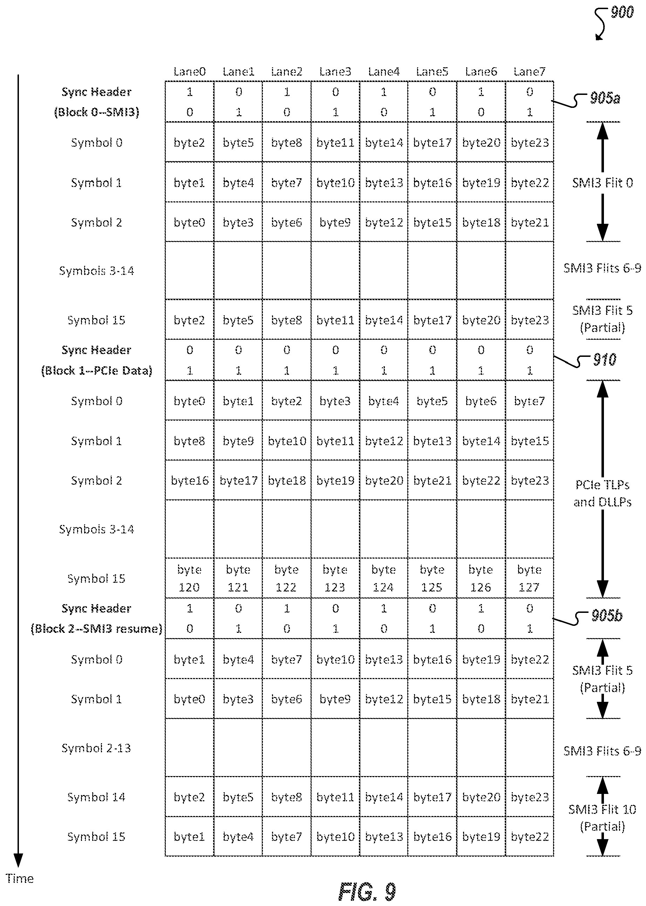

Turning to FIG. 9, a representation 900 is shown illustrating a first implementation of SML. For instance, SML can be implemented by overlaying SMI3 on a PCIe PHY. The physical layer can use standard PCIe 128b/130b encoding for all physical layer activities including link training as well as PCIe data blocks. SML can provide for traffic on the lanes (e.g., Lane0 - Lane7) of the link to be multiplexed between PCIe packets and SMI3 flits. For example, in the implementation illustrated in FIG. 9, the sync header of the PCIe 128b/130b encoding can be modified and used to indicate that SMI3 flits are to be sent on the lanes of the link rather than PCIe packets. In traditional PCIe 128b/130b encoding, valid sync headers (e.g., 910) can include the sending of either a 10b pattern on all lanes of the link (to indicate that the type of payload of the block is to be PCIe Data Block) or a 01b pattern on all lanes of the link (to indicate that the type of payload of the block is to be PCIe Ordered Set Block). In an example of SML, an alternate sync header can be defined to differentiate SMI3 flit traffic from PCIe data blocks and ordered sets. In one example, illustrated in FIG. 9, the PCIe 128b/130b sync header (e.g., 905a, 905b) can be encoded with alternating 01b, 10b patterns on odd/even lanes to identify that SMI3 flits are to be sent. In another alternative implementation, the 128b/130b sync header encoding for SMI3 traffic can be defined by alternating 10b, 01b patterns on odd/even lanes, among other example encodings. In some cases, SMI3 flits can be transmitted immediately following the SMI3 sync header on a per-byte basis, with the transition between PCIe and SMI3 protocols taking place at the block boundary.

In some implementations, such as that illustrated in the example of FIG. 9, the transition between the protocols can be defined to take place at the block boundary irrespective of whether it corresponds to an SMI3 flit or PCIe packet boundary. For instance, a block can be defined to include a predefined amount of data (e.g., 16 symbols, 128 bytes, etc.). In such implementations, when the block boundary does not correspond to an SMI3 flit or PCIe packet boundary, the transmission of an entire SMI3 flit may be interrupted. An interrupted SMI3 flit can be resumed in the next SMI3 block indicated by the sending of another sync header encoded for SMI3.

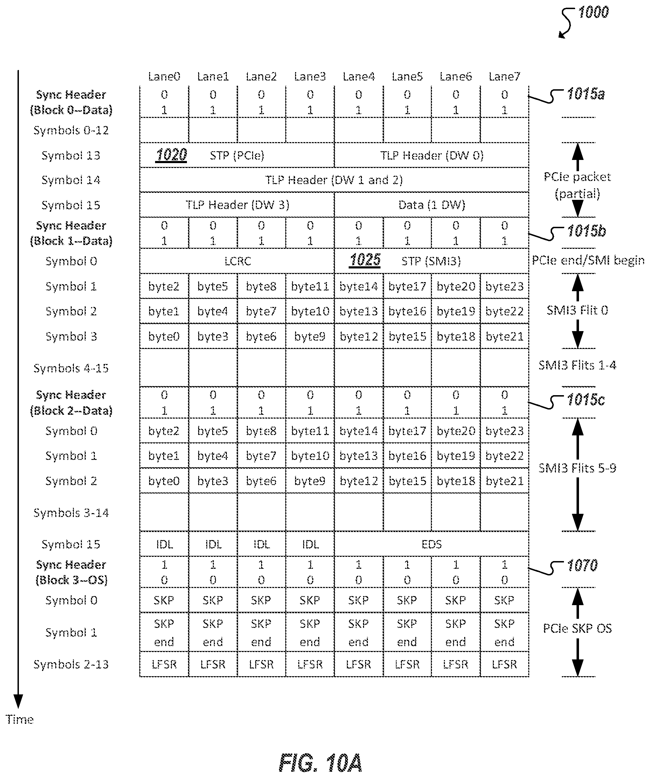

Turning to FIG. 10A, a representation 1000 is shown illustrating another example implementation of SML. In the example of FIG. 10A, rather than using a specialized sync header encoding to signal transitions between memory access and interconnect protocol traffic, physical layer framing tokens can be used. A framing token (or "token") can be a physical layer data encapsulation that specifies or implies the number of symbols to be included in a stream of data associated with the token. Consequently, the framing token can identify that a stream is beginning as well as imply where it will end and can therefore be used to also identify the location of the next framing token. A framing token of a data stream can be located in the first symbol (Symbol 0) of the first lane (e.g., Lane 0) of the first data block of the data stream. In the example of PCIs, five framing tokens can be defined, including start of TLP traffic (STP) token, end of data stream (EDS) token, end bad (EDB) token, start of DLLP (SDP) token, and logical idle (IDL) token.

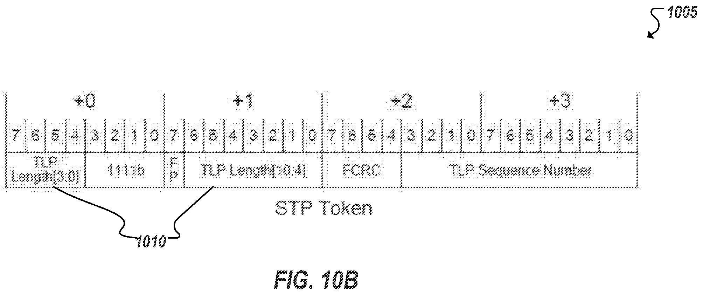

In the example of FIG. 10A, SML can be implemented by overlaying (or "tunneling") SMI3 or another data access protocol on PCIe and the standard PCIe STP token can be modified to define a new STP token that identifies that SMI3 (instead of TLP traffic) is to commence on the lanes of the link. In some examples, values of reserve bits of the standard PCIe STP token can be modified to define the SMI3 STP token in SML. Further, as shown in FIG. 10B, an STP token 1005 can include several fields, including a 1010 field that identifies the length of the SMI3 payload (in terms of the number of flits) that is to follow. In some implementations, one or more standard payload lengths can be defined for TLP data. SMI3 data can, in some implementations, be defined to include a fixed number of flits, or in other cases, may have variable numbers of flits in which case the length field for the number of SMI3 flits becomes a field that can be disregarded. Further, the length field for an SMI3 STP can be defined as a length other than one of the defined TLP payload lengths. Accordingly, an SMI3 STP can be identified based on a non-TLP length value being present in the STP length field, as one example. For example, in one implementation, the upper 3-bits of the 11-bit STP length field can be set to 111b to indicate the SMI3 packet (e.g., based on the assumption that no specification-compliant PCIe TLP can be long enough to have a length where the upper 3 bits of the length field would result in 1's). Other implementations can alter or encode other fields of the STP token to differentiate a PCIe STP token identifying a traditional PCIe TLP data payload from a SMI3 STP token identifying that SMI3 data is encapsulated in TLP data.

Returning to the example of FIG. 10A, sync header data can follow the encoding specified for traditional PCIe 128b/130b encoding. For instance, at 1015a-c, sync headers with value 10b are received indicating that data blocks are forthcoming. When a PCIe STP (e.g., 1020) is received, a PCIe TLP payload is expected and the data stream is processed accordingly. Consistent with the payload length identified in the PCIe STP 1020, the PCIe TLP payload can utilize the full payload length allocated. Another STP token can be received essentially at any time within a data block following the end of the TLP payload. For instance, at 1025, an SMI3 STP can be received signaling a transition from PCIe TLP data to SMI3 flit data. The SMI3 STP can be sent, for instance, as soon as an end of the PCIe packet data is identified.

Continuing with the example of FIG. 10A, as with PCIe TLP data, the SMI3 STP 1025 can define a length of the SMI3 flit payload that is to follow. For instance, the payload length of the SMI3 data can correspond to the number of SMI3 flits in terms of DWs to follow. A window (e.g., ending at Symbol 15 of Lane 3) corresponding to the payload length can thereby be defined on the lanes, in which only SMI3 data is to be sent during the window. When the window concludes, other data can be sent, such as another PCIe STP to recommence sending of TLP data or other data, such as ordered set data. For instance, as shown in the example of FIG. 10A, an EDS token is sent following the end of the SMI3 data window defined by SMI3 STP token 1025. The EDS token can signal the end of the data stream and imply that an ordered set block is to follow, as is the case in the example of FIG. 10A. A sync header 1040 is sent that is encoded 01b to indicate that an ordered set block is to be sent. In this case a PCIe SKP ordered set is sent. Such ordered sets can be sent periodically or according to set intervals or windows such that various PHY-level tasks and coordination can be performed, including initializing bit alignment, initializing symbol alignment, exchanging PHY parameters, compensating for different bit rates for two communicating ports, among other examples. In some cases, a mandated ordered set can be sent to interrupt a defined window or data block specified for SMI3 flit data by a corresponding SMI3 STP token.

While not shown explicitly in the example of FIG. 10A, an STP token can also be used to transition from SMI3 flit data on the link to PCIe TLP data. For instance, following the end of a defined SMI3 window, a PCIe STP token (e.g., similar to token 1020) can be sent to indicate that the next window is for the sending of a specified amount of PCIe TLP data.

Memory access flits (e.g., SMI3 flits) may vary in size in some embodiments, making it difficult to predict, a priori, how much data to reserve in the corresponding STP token (e.g., SMI3 STP token) for the memory access payload. As an example, as shown in FIG. 10, SMI3 STP 1025 can have a length field indicating that 244 bytes of SMI3 data is to be expected following the SMI3 STP 1025. However, in this example, only ten flits (e.g., SMI3 Flits 0-9) are ready to be sent during the window and these ten SMI3 flits only utilize 240 of the 244 bytes. Accordingly, four (4) bytes of empty bandwidth is left, and these are filled with IDL tokens. This can be particularly suboptimal when PCIe TLP data is queued and waiting for the SMI3 window to close. In other cases, the window provided for the sending of SMI3 flits may be insufficient to send the amount of SMI3 data ready for the lane. Arbitration techniques can be employed to determine how to arbitrate between SMI3 and PCIe TLP data coexisting on the link. Further, in some implementations, the length of the SMI3 windows can be dynamically modified to assist in more efficient use of the link. For instance, arbitration or other logic can monitor how well the defined SMI3 windows are utilized to determine whether the defined window length can be better optimized to the amount of SMI3 (and competing PCIe TLP traffic) expected for the lane. Accordingly, in such implementations, the length field values of SMI3 STP tokens can be dynamically adjusted (e.g., between different values) depending on the amount of link bandwidth that SMI3 flit data should be allocated (e.g., relative to other PCIe data, including TLP, DLLP, and ordered set data), among other examples.

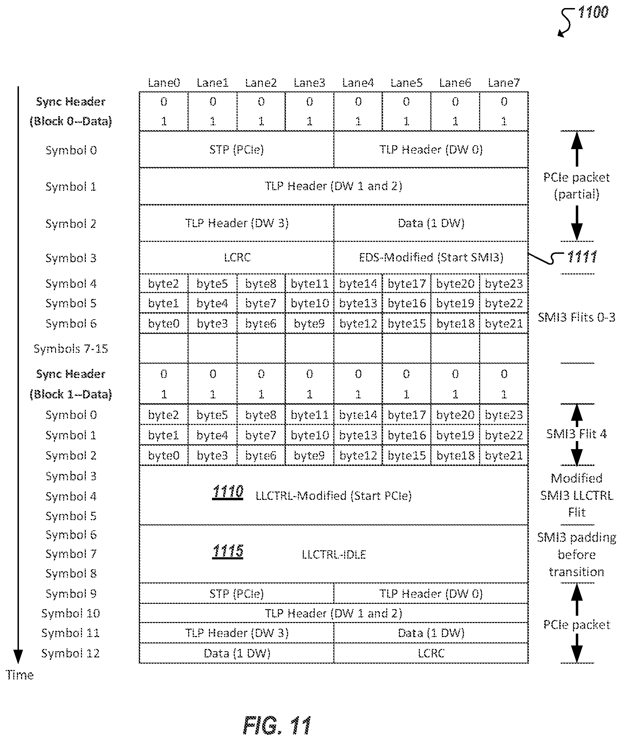

Turning to FIG. 11, a representation 1100 of another example implementation of SML is illustrated. In this alternative embodiment, SML can provide for interleaving SMI3 and PCIe protocols through a modified PCIe framing token. As noted above, an EDS token can be used in PCIe to indicate an end of a data stream and indicate that the next block will be an ordered set block. In the example of FIG. 11, SML can define an SMI3 EDS token (e.g., 1105) that indicates the end of a TLP data stream and the transition to SMI3 flit transmissions. An SMI3 EDS (e.g., 1105) can be defined by encoding a portion of the reserved bits of the traditional EDS token to indicate that SMI3 data is to follow, rather than PCIe ordered sets or other data that is to follow a PCIe EDS. Unlike the traditional EDS token, the SMI3 EDS can be sent at essentially anywhere within a PCIe data block. This can permit additional flexibility in sending SMI3 data and accommodating corresponding low-latency shared memory transactions. For instance, a transition from PCIe to SMI3 can be accomplished with a single double word (DW) of overhead. Further, as with traditional EDS tokens, an example SMI3 EDS may not specify a length associated with the SMI3 data that is to follow the token. Following an SMI3 EDS, PCIe TLP data can conclude and SMI3 flits proceed on the link. SMI3 traffic can proceed until SMI3 logic passes control back to PCIe logic. In some implementations, the sending of an SMI3 EDS causes control to be passed from PCIe logic to SMI3 logic provided, for instance, on devices connected on the link.

In one example, SMI3 (or another protocol) can define its own link control signaling for use in performing link layer control. For example, in one implementation, SML can define a specialized version of a SMI3 link layer control (LLCTRL) flit (e.g., 1110) that indicates a transition from SMI3 back to PCIe protocol. As with an SMI3 EDS, the defined LLCTRL flit (e.g., 1110) can cause control to be passed from SMI3 logic back to PCIe logic. In some cases, as shown in the example of FIG. 11, the defined LLCTRL flit (e.g., 1110) can be padded with a predefined number of LLCTRL idle (LLCTRL-IDLE) flits (e.g., 1115) before completing the transition to PCIe. For instance, the number of LLCTRL-IDLE flits 1115 to be sent to pad the SMI3 LLCTRL flit 1110 can depend on the latency to decode the defined SMI3 LLCTRL flit 1110 signaling the transition. After completing the transition back to PCIe, an STP packet can be sent and TLP packet data can recommence on the link under control of PCIe.

In a multi-node system, it is desirable to have a set of resources that can be assigned dynamically to various nodes, depending on demand. There are three broad categories of resources: compute, memory, and I/O. A node can be or represent a collection of processing elements coupled with memory and I/O that runs a single system image (such as BIOS or VMM or OS). In some cases, a pool of memory can be dynamically allocated to different nodes. Further, this pool of memory (as illustrated in previous examples above) can be distributed and managed by multiple different memory controllers, such as shared memory controllers (SMCs). Each node can connect to one or more SMCs, each SMC acting as an aggregator for one or more nodes and connecting to a respective portion of the pooled memory, using an interconnect such as a buffered memory link interconnect, a shared memory link interconnect, or other interconnect adopting at least some of the principles described above. Each node can communicate with an SMC to access a part of this pool using normal memory Load/Store (LD/ST) semantics. In some cases, nodes can optionally cache the memory in its local cache hierarchy.

Having a memory pool that can be dynamically assigned to various nodes offers multiple advantages. For instance, memory upgrade cycles can be independent of CPU upgrade cycles. For example, the memory pool can be replaced after multiple CPU upgrades, providing significant cost savings to the customer. As another example, memory can be allocated in a more cost-effective manor, particular as memory capacity increases significantly with the next generation non-volatile memory technologies. For example, the DIMM size may be 256GB to 1TB, but a micro-server node may only use 32 to 64 GB of memory. The pooling mechanism can enable fractional DIMM assignment to nodes. As other example advantages, memory can be flexibly allocated based on node demand, memory pooling can enable power efficiency as overprovisioning of each node with the maximum memory capacity can be avoided. Further, high compute density due to memory being dis-aggregated from compute can be realized, as well as memory sharing between independent nodes in a rack level system, among other example advantages.

Data/information that is stored in the pool of memory may be accessed by multiple nodes. In some cases, one node's dedicated memory (included in the pool of memory) may be taken over by another node, for instance, when the node crashes or is reassigned to some other tasks/pool. In these and other cases, it can be desirable to protect against memory and/or SMC failures.

In some example implementations, at least some shared memory controllers and/or computing nodes can be provided with functionality to assist in handling memory, memory link, and SMC failures. For instance, at least two shared memory links can be provided from each node to an SMC (e.g., either two different SMCs or two links to the same SMC). This can eliminate a single point of failure between a node and buffered pooled memory (e.g., if a shared memory link goes down). Additionally, each node (or SMC) can be provided with fault detection logic to identify when a shared memory link (or SMC) in a routing path goes down. For instance, a node or SMC can provided with the ability to timeout transactions and potentially retry transactions on an alternate SML path and/or poison the transaction back to the requestor. Further, to protect against memory failures, particular memory locations in the pooled memory can be replicated across multiple SMCs. To achieve more efficient memory redundancy, techniques such as redundant array of inexpensive disks (or redundant array of independent disks) (RAID) solutions can be supported by SMCs. Address maps used in routing of requests and responses between multiple SMCs can likewise be provided, including address map decode logic to identify and use the alternate (e.g., replicated) or RAID memory locations in the event of a detected failure. Further, SMCs can be provided with logic to assist in reconstruction of a failed location in a new location and updating the memory address map to reflect the new location, among other examples.

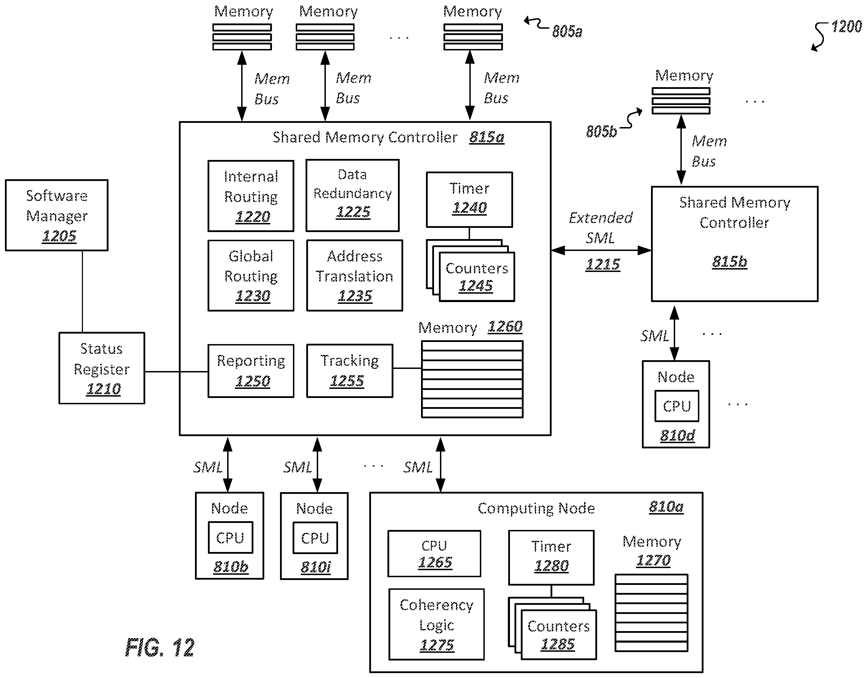

FIG. 12 illustrates a simplified block diagram 1200 illustrating an example system (implemented in one or more devices, chips, or dies) including portions (e.g., 805a, 805b) of a memory pool, a set of computing nodes (e.g., 810a, 810b, 810d, 810i), a set of shared memory controllers 815a, 815b, a software-based system manager 1205, and status register 1210, among potentially other components and sub-systems. The set of shared memory controllers can be interconnected by extended SMLs (e.g., 1215) to allow routing of requests to an SMC (e.g., 815b) from a node (e.g., 810a), wherein the request involves a line of memory in a portion of pooled memory (e.g., 805b) not directly connected to the SMC 815a to which the node is directly connected.

As illustrated in FIG. 12, in one example implementations, a shared memory controller 815a can include various sub-modules implemented in hardware, firmware, and/or software, such as internal routing logic 1220, a data redundancy handler 1225, global routing logic 1230, address translation logic 1235, error detection and handling logic (e.g., implemented, at least in part, by a timer 1240 and counters 1245), fault reporting logic 1250, and transaction tracking logic 1255. The SMC 815a can further including internal memory 1260 and processing hardware (not explicitly shown) to drive the functionality of these sub-modules. Address translation logic 1235 can be provided to facilitate translation of memory addresses used by nodes according to their independent address maps into global addresses for a global memory map representing the entirety of the pooled memory. In some implementations, address translation logic can adopt principles described in U.S. Patent App. Ser. No. 14/671,566, filed on March 27, 2015, entitled "Pooled Memory Address Translation" among other example solutions.

Internal 1220 and global routing logic 1230 of an SMC can utilize a global address returned by address translation logic 1235 to determine how to route memory access requests (and responses to these requests). Internal routing logic 1230 can be used in instances where the global address references physical memory (e.g., at 805a) controlled by the SMC (e.g., 815a). Global routing logic 1230, on the other hand, can be used in instances where the global address references physical memory (e.g., at 805b) controlled by another SMC (e.g., 815b) and the SMC 815a is to route a request received by one of its nodes (e.g., 810a, 810b, 810i) to the other SMC over one or more extended SML links (e.g., 1215).

An SMC 805a, using transaction tracking logic 1255, can track open transactions involving requests received from any one of its nodes (e.g., 810a, 810b, 810i). The SMC 815a can utilize its internal memory 1260 to track aspects of these transactions, allowing the transactions to be regenerated in cases where an error occurs and a request is to be re-sent. In some instances, nodes (e.g., 810a, 810b, 810i) of the SMC can also have transaction tracking logic to track and regenerate their transactions and any transaction tracking logic at the SMC (e.g., 815a) can supplement the transaction tracking logic of the nodes.

As noted, an SMC 815a can also include logic for detecting error conditions. In some cases, error detection logic (e.g., timer 1280 and counters 1285) can also, or alternatively, be hosted at each computing node (e.g., 810a). A computing node (e.g., 810a) can further include one or more processors (e.g., CPU 1265), coherency logic 1275 (in connection with one or more caches in memory 1270), and potentially other components.

In some cases, the SMC 815a (or node 810a) can detect errors through timeout conditions. Accordingly, a timer (e.g., 1240, 1280) can be implemented to check that a transaction completes within an expected amount of time. If a timeout condition arises, the transaction can be retried one or more times before a determination is made (e.g., in connection with a subsequent timeout) that a link, memory element, or SMC is "broken". Timeouts and errors can be reported by the SMC (using reporting logic 1250). In one example, errors can be written to a status register 1210 that can be accessed by (or cause interrupts to be fielded by) a system management software 1205. The system management software 1205 can then take steps to remedy the error, including reassigning data from one memory block to another, defining alternate routes for paths between various SMCs, among other example solutions. In some cases, system management software 1205 can further perform tasks such as reprogramming address translation logic so that logical addresses are no longer mapped to physical addresses that correspond to unreachable memory, among other examples.

In one example, when an SMC receives a transaction (e.g., a read or write), it can first decode the node address to a system wide address (e.g., using address translation logic 1235) to determine the destination SMC/ memory bus. To ensure that transactions do complete in time, the SMC can maintain a timer 1240 that keeps track of the time elapsed since the transaction was launched. If the transaction does not complete within the predetermined (e.g., as set by the system designer through a programmable configuration register) time, the transaction can be said to have timed out and necessary corrective actions are taken. These could mean retrying the transaction along the same path up to a certain predetermined number of times, trying along an alternate path (or multiple different alternate paths) for a certain number of times (e.g., using redundant SML connections), and if that fails, generating a "poison" response to indicate failure and requesting software (e.g., 1205) intervention for recovery. Each of the nodes (e.g., 810a, 810b, 810d, 810i) can implement the same set of mechanisms for its outgoing (i.e., toward its SMC) memory transaction. A system may be implemented such that after the first timeout, a poison response is generated without any retries. Similarly, a system may be implemented, where each path is tried only once before moving on to a new path, among other examples.

In some implementations, instead of running a separate timer (e.g., 1240, 1280) for each pending transaction, a global timer (across all transactions) may be implemented. The global timer can be a free running timer. For each transaction, a counter (e.g., 1245, 1285) can be maintained in connection with the global timer to indicate time elapsed for that transaction. Each counter may utilize only a few bits to track time elapsed for the transaction. As an example, a two-bit counter can be maintained per outstanding transaction. Whenever a new transaction is launched, a corresponding counter is reset. While the transaction is outstanding, the counter is enabled to rollover whenever the timer rolls over. In one example, a counter can be configured to increment from 00b to 01b to 10b and so on. In one example, when the counter reaches a value of binary "3" ("1"→"2" and then "2"→"3"), the transaction can be considered to have timed out. Thus, accuracy of the counter would be 2-3 global timer rollover times, depending on when the transaction launched relative to the next global timer rollover event. With a 3 bit counter, the accuracy would be 6-7 global timer rollover times, among other examples.

As noted above, in order to enable retrying of transactions, in some implementations, the transactions can be tracked and preserved. In one example, an SMC (using transaction tracking logic 1255) can preserve received transactions in a register-file or RAM in the internal memory 1260 of the SMC 815a. Alternatively, the SMC (e.g., 815a) can store transactions in the portion of the memory (e.g., 805a) managed by the SMC. In still other instances, the SMC 815a can use memory 805a as an overflow for a register or other structure in the SMC's internal memory 1260 to track transactions in excess of the capacity of the internal memory's register, among other examples. When memory 805a is used for transaction tracking by SMC 815a, the portion of the memory 805a utilized can be a dedicated portion with access restrictions limiting access to only the SMC 815a (and potentially also system management software 1205), among other examples. In another example, a portion of memory 805a can be used for transaction tracking and the SMC 815a (e.g., through transaction tracking logic 1255) can maintain pointers (e.g., in internal memory 1260) to the location of transaction tracking data stored in the memory 805a. For instance, the pointer to the memory location can be stored with the transaction bits inside the memory 1260 of the SMC 805a, or can be an off-set from the tag of the outstanding transaction location used for tracking that are to be retried.

By preserving transactions, in the event of a timeout (or other event prompting a retry), the transaction copy can be retrieved from memory (e.g., 805a or 1260) and retransmitted along the same or an alternate SML path. Along with the timer bits, error detection logic can count the number of retries and track any alternate path(s) that have been tried (and how many times each path was tried) for each transaction. This information can be stored in the memory 805a connected to the SMC 805a or the SMC's internal memory 1260. Further, in addition to detecting and managing errors using timeouts and retries from the perspective of an SMC, timeouts and retries can be driven alternatively or additionally by the nodes (e.g., using their own error detection and retry logic (e.g., 1280, 1285)) corresponding to the transactions, among other example alternatives.

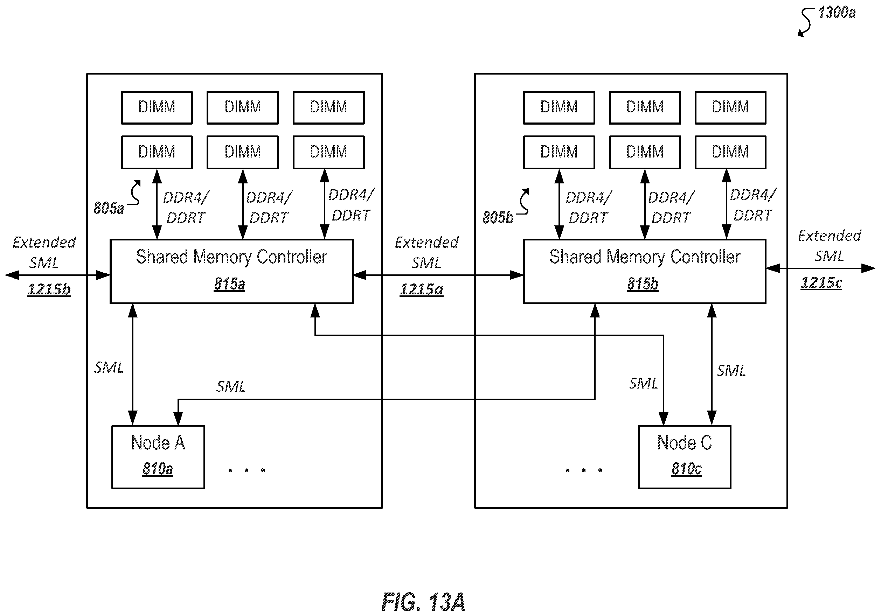

Turning to the simplified block diagrams 1300a-c of FIGS. 13A-C, a shared memory architecture can be constructed with redundant SML connections to avoid single points of failure resulting from an SML layer. For instance, if a single SML connects a computing node to its local SMC, this error can not only cut off the node's access to the portion of pooled memory managed by the local SMC, but all other pooled memory managed by other SMCs, which the node is permitted to access through its local SMC. Further, redundant extended SML connections can be provided between SMCs to avoid a single point of failure in a network of SMCs. Accordingly, each SMC can be provided with two or more interfaces to support two or more extended SML connections to other SMCs.

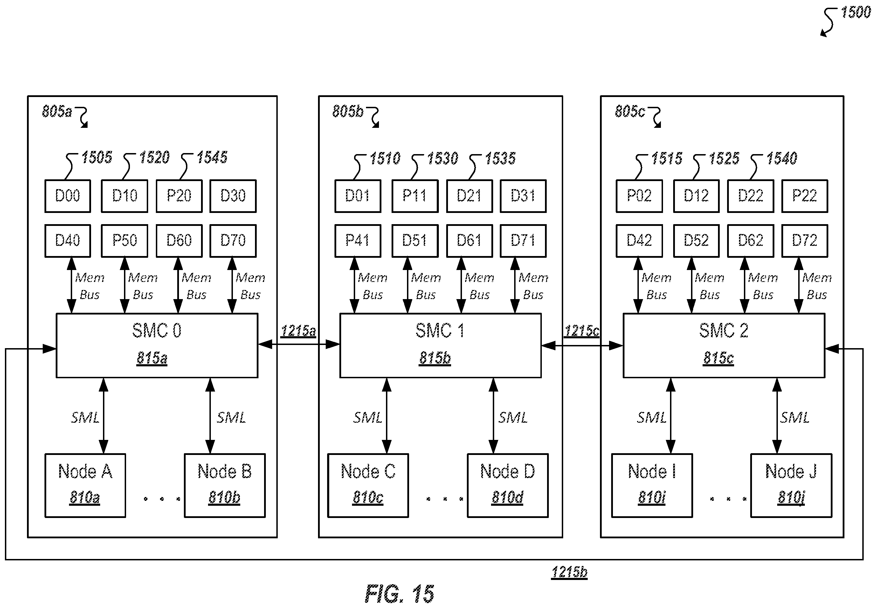

In one example, shown in FIG. 13A, each node (e.g., 810a, 810c) has two SML connections to an SMC. In this example, each node (e.g., 810a, 810c) is connected to at least two different SMCs by respective SML interfaces. In other examples, nodes can be connected to more than two different SMCs. Accordingly, if error detection logic determines that one of the SMLs of a node is broken (e.g., the SML connecting Node A 810a to SMC 815a), an alternative SML can be tried connecting the node (e.g., 810a) to another SMC (815b). The node (e.g., 810a) can still access the memory (e.g., 805a) of the first SMC (e.g., SMC 815a) through the extended SML link (e.g., 1215a) connecting the node's backup SMC (e.g., 815b) with its primary SMC (e.g., 815a). Further, as in other examples shown herein (e.g., in FIGS. 8B, 8C, 15), each SMC can be connected to two or more of the other SMCs in a network of SMCs in a shared memory architecture. Accordingly, in the case of an extended SML error, any SMC would still have at least one alternative extended SML to use in the routing of a request or response to another SMC. For instance, if extended SML 1215a has an error, a request to be forwarded from SMC 815b to SMC 815a can be retried along another (perhaps less direct path) using another SML 1215c.

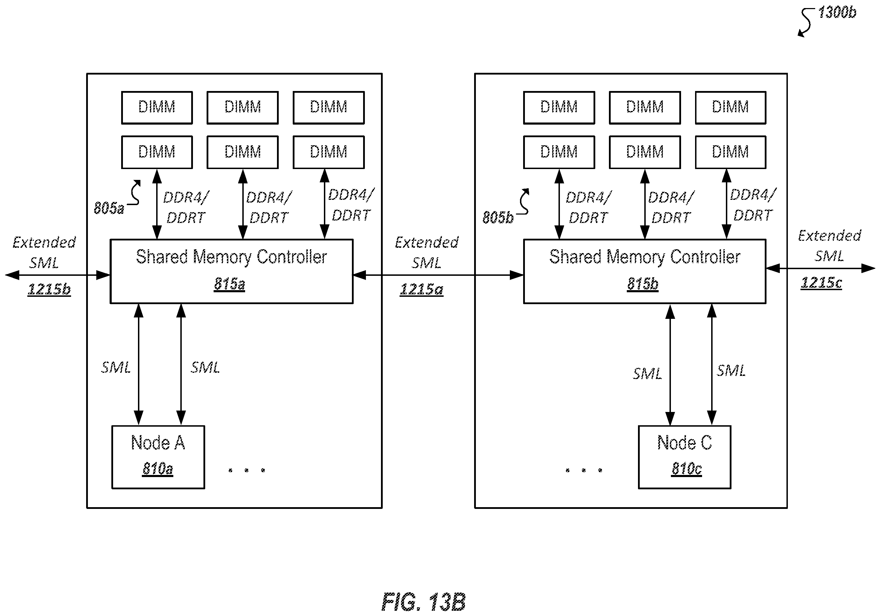

In another example, shown in FIG. 13B, rather than (or in addition to) providing nodes with a second SML interface to connect to two different SMCs, a node (e.g., 810a) can be provided with redundant SML interfaces to support two SMLs to the same SMC (e.g., 815a). Similar redundant SML interfaces can be provided for each connection between a node and one or more SMCs. Indeed, the principles of the example of FIG. 13B can be combined with the principles of FIG. 13A. In some cases, such redundancy may be overprotective. In some cases, redundancy SML interfaces (according to either the example of FIG. 13A or 13B) may be reserved for only a portion of the nodes in a system (such as nodes tasked with particularly important or critical tasks). In other implementations, redundant two or more SML interfaces can be provided for every node-SMC connection in the system.

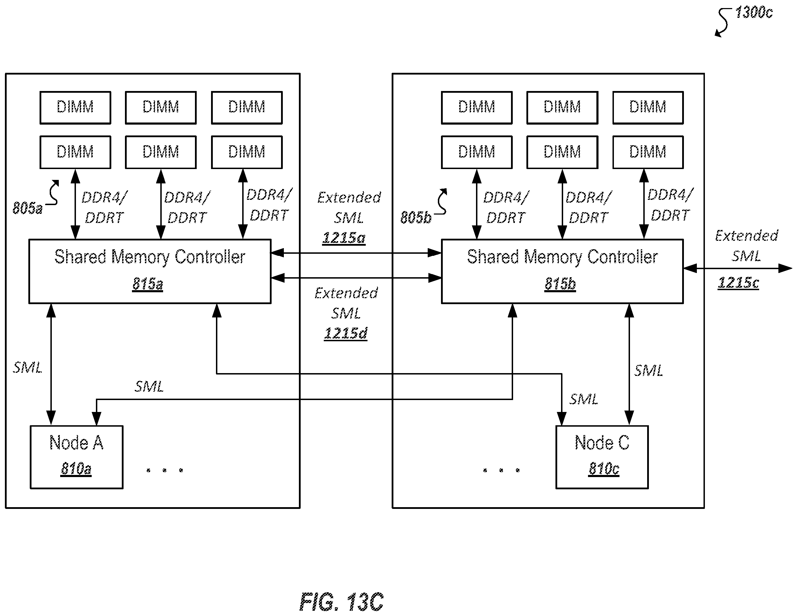

The interface redundancy introduced in the example of FIG. 13B for SML connections between nodes and SMCs can also be applied to extended SML interfaces between SMCs, as shown in the simplified block diagram 1300a of FIG. 13C. As shown, in some cases, duplicate extended SML interfaces can be provided to allow two SMLs (e.g., 1215a, 1215d) between two SMCs (e.g., 815a, 815b) to mitigate against link failures between SMCs. In some instances, multiple alternative routing paths can be enabled through the topology adopted for interconnecting a plurality of SMCs in a network. For instance, a star or ring topology can be adopted to provide each SMCs with connections to two or more different SMCs in the network. Indeed, in some cases, every SMC can connect directly to every other SMC in the network through multiple SML interfaces at each SMC. Duplicate redundant extended SML interfaces (e.g., for duplicate extended SMLs 1215a, 1215d) can be advantageous in cases (such as shown in FIG. 13C) where one SMC (e.g., 815a) connects to only one other SMC (e.g., 815b) in the network.

In addition to mitigating against SML errors through multiple redundant SMLs and extended SMLs, systems can also adopt memory replication to mitigate against memory errors (e.g., errors in the memory elements hosting the pooled memory). For instance, all or subset of the pooled memory ranges can be designated to be replicated such that each of the designated memory ranges is replicated and accessible through two or more different SMCs. The replication can be on two SMCs (2-ary replication), across three SMCs (3-ary replication), or potentially any other *k*-ary replication.

As a simplified example in the context of FIG. 13A above, a 2-ary replication can be applied such that at least some of the memory ranges stored in physical memory 805a are replicated in physical memory 805b, and at least some of the memory ranges in physical memory 805b are replicated in physical memory 805a. Each of the nodes connected to SMCs 815a and 815b (through the multiple SML connections) can then conveniently access duplicate copies accessible through their respective "backup" SMC. For instance, node 810a can use SMC 815a for hosting its primary memory and SMC 815b for hosting their backup memory. Likewise, node 810c can use SMC 815b for hosting its primary memory and SMC 810a for hosting its backup memory. Continuing with the present example, for each write received to a primary address location hosted by SMC 815a, SMC 815a can provide replication services that would spawn off a second write across the extended SML port 1215a to a backup location behind SMC 815b. SMC 815b would similarly provide the same replication services for writes it receives targeting a primary address location it hosts, spawning off a second write across the expansion port 1215a to a backup location behind SMC 815a.

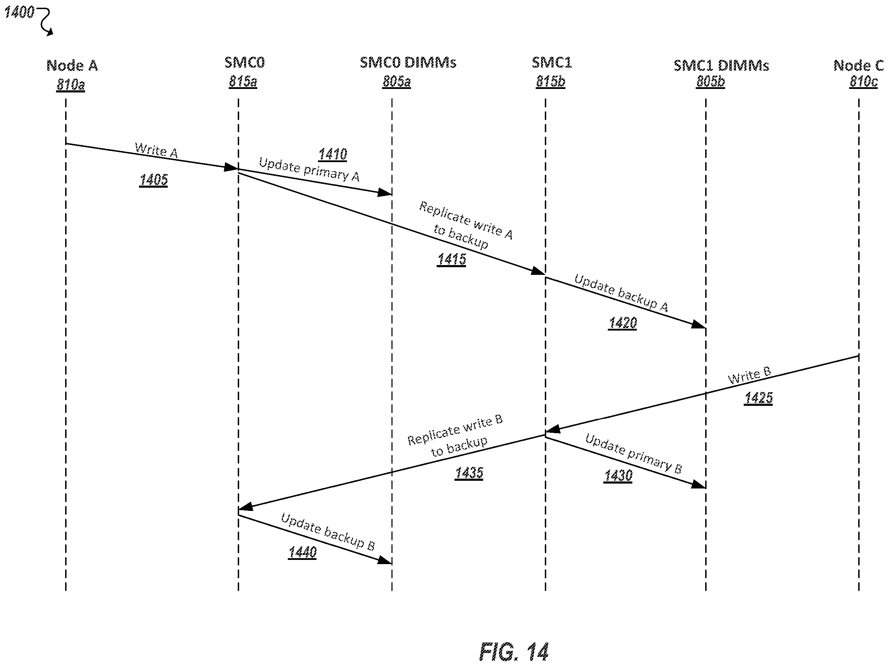

Turning to FIG. 14, a simplified flow diagram 1400 is shown representing replication activities in an example 2-ary replication scheme. In order to ensure that replications remains consistent, particularly following writes that change the memory in the primary memory location, a shared memory controller can be responsible for communicating updates to sister SMCs which hold the replicated copy of the updated line of memory. For instance, a Node A (815a) can write to memory location A stored in the memory 805a managed by SMC0 (815a). The write 1405, as in other buffered memory transactions, is received from Node A at SMC0 and SMC0 can update the primary memory location A (in memory 805a) accordingly. The SMC0 can then communicate 1415 with SMC1 (which manages the backup for memory location A) to communicate that the primary location A has been updated. SMC1 can then access memory 805b, locate the backup copy of A and update it accordingly (at 1420). Likewise, writes (e.g., 1425) by a Node C (810c) to its primary memory through SMC1 (815b) can cause the SMC1 to update the primary memory location (at 1430) and send a request 1435 (over an extended SML) to the SMC (e.g., 815a) hosting the backup of the written-to line to cause the other SMC to locate and update its backup copy of the line (at 1440).

Following the writes (e.g., 1410, 1430), as with other transactions, the corresponding SMC (e.g., 815a, 815b) can send a response (e.g., a write completion) indicating that the write was successful. In some instances, these write completions may only be sent only after both SMCs (e.g., 815a, 815b) have acknowledged receiving the write (e.g., at 1405 and 1415). In some implementations, the primary SMC (e.g., 815a) for a particular memory location (e.g., in 805a) may wait until it receives confirmation from the backup SMC (e.g., 815b) that it has successfully updated its backup copy of the line (e.g., at 1420) before the primary SMC sends a completion response to the node (e.g., 810a). In other instances, performance can be optimized through a simple link level handshake that involves the backup SMC sending an acknowledgement that it has received the request to replicate the write (e.g., 1415) (but not necessarily completed its corresponding write). The primary SMC, upon receiving this acknowledgement can send the write completion back to the requesting node. This optimization can be realized, for instance, in the presence of a guarantee that the SMCs will drain to memory on any power down/failure events using back-up mechanisms (such as a large capacitor that ensures all outstanding persistent writes are committed to memory), among other examples.

In cases where a primary SMC hosting a primary copy of a line fails, its "local" nodes (i.e., nodes using it as their primary SMC) could at least temporarily switch over to using the backup SMC as their primary memory host (e.g., using their alternate SML connecting them to their backup SMC (as in the example of FIG. 13A)). In instances where the backup SMC in a memory replication arrangement is down during a write to the primary location, in order to ensure that this write makes it way to the backup copy, the primary SMC can preserve a copy of the write for delivery to the backup SMC (or a replacement backup SMC) once available. In some instances, system management software can be engaged in updating backup copies of replicated memories, for instance, in the case of an error indicating that the backup SMC (or its memory) is in an error or disabled state, among other examples.

Further, in systems employing memory replication, the system address map maintained by the SMCs can be augmented to have references to the destination SMC along with the physical address(es) and the location of the SMC(s) hosting corresponding replicated copies of the line or range of memory. Accordingly, the SMC receiving the transaction from the node can determine how to replicate each of the writes to the primary data it hosts, how to send the read to one of the SMCs, along with using alternate paths to a different SMC in the event of a timeout or error. For example, in example of FIG. 13A above, both SMCs may maintain address translation structures for the primary and secondary locations and physical addresses for each memory location being replicated in its portion of pooled memory, among other example implementations.

While memory replication provides increased reliability, the cost is the decrease in effective memory capacity. For example, a 2-ary replication causes the effective memory capacity to be halved; a 3-ary replication causes the memory capacity to go to 33%, and so on. In some implementations, in order to make memory duplication in a pooled memory more capacity efficient, memory virtualization techniques can be performed, such as through the use of a RAID solution (e.g., RAID-5 or RAID-6). The shared memory controllers can be implemented with logic (e.g., hardware-implemented logic) to implement RAID-based duplications.

FIG. 15 is a simplified block diagram 1500 illustrating one example of a network of SMCs (e.g., 815a-c) managing portions (e.g., 805a-c) of pooled memory and applying RAID-5 to replicate memory between the SMCs and their memory. For RAID, each SMC (e.g., 815a-c) maintains a record of all the addresses that are to be used to generate a RAID parity value as well as indications of where the corresponding RAID parity values are stored (e.g., one parity location for RAID-5 and two for RAID-6). In the example of FIG. 15, RAID-5 has been applied by generating RAID parity values (e.g., 1515, 1530, 1545) for the memory (e.g., 805a-c) hosted behind SMC0, SMC1, and SMC2. To mitigate against a single point of failure and for more even memory distribution, RAID parity can be striped across locations behind each of the SMCs 815a-c (such that each SMC hosts at least one RAID parity value). For instance, to generate RAID-5 parity, the data at addresses mapped to D00 (1505) behind SMC0 (815a) can be XORed with the data at addresses mapped to D01 (1510) behind SMC1 (815b). The result of this XOR is a RAID-5 parity value to be stored in P02 (1515) behind SMC2 (815c). Similarly, the data at addresses mapped to D10 (1520) behind SMC0 (815a) is XORed with the data at addresses mapped to D12 (1525) behind SMC2 (815c) to generate a corresponding RAID parity value that is stored in P11 (1530) behind SMC1 (815b). This same function and parity storage pattern can be applied to all memory locations that are designated for replication (e.g., D21 (1535) XORed with D22 (1540) to generate a RAID-5 parity value to be stored at P20 (1545), and so on). In the event of an error, as long as the data at the other memory address (e.g., 1510) and the stored corresponding RAID parity value (e.g., 1515) are available, the unavailable memory address (e.g., 1505) can be derived from the other memory address and RAID parity by XORing the two values at either the SMC (e.g., 815b) of the other memory address (e.g., 1510) or the SMC (e.g., 815c) hosting the parity value. The SMC can retrieve the other value needed to perform the XOR using a request over an extended SML link (e.g., 1215c). The resulting recovered data value can then be accessed and operated upon to derive a result for the requesting node (e.g., using any one of the involved SMCs).

In the event of a write in a system employing RAID-5 replication, the SMC handling the write can perform an XOR of the new data (i.e., to be written) with the old data (i.e., that is to be overwritten) and forwards the XOR result to the SMC storing the corresponding RAID parity value to cause the parity value to be updated to reflect the write. In one instance, the SMC that hosts the parity value can read the old parity value and performs an additional XOR with the newly received XOR information to generate the new parity value reflecting the newly written value. The SMC hosting the parity value can then write the updated parity back to the parity storage location for future use.

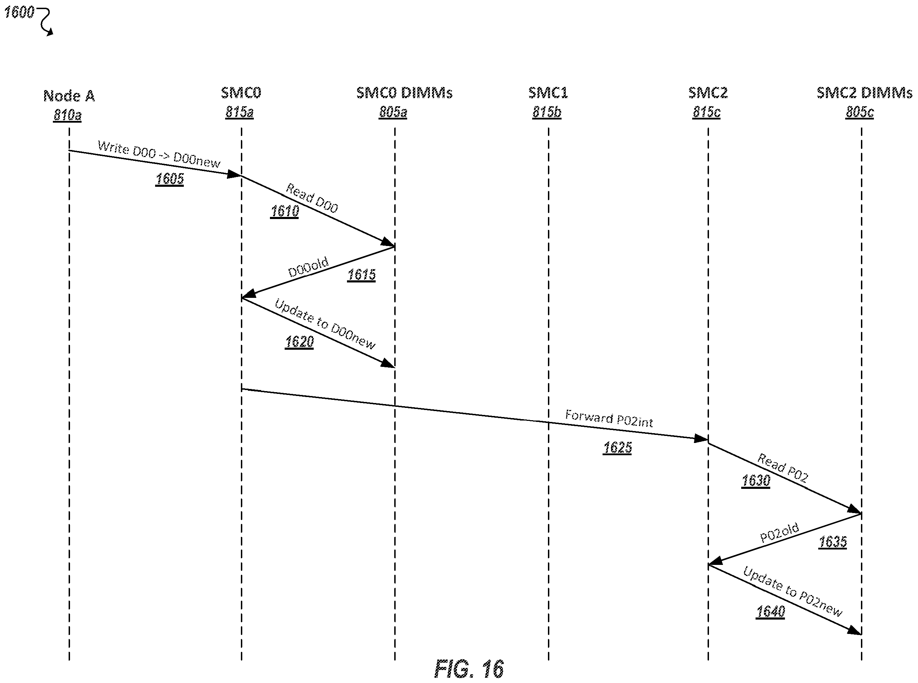

Turning to the flowchart 1600 of FIG. 16, an example is presented of a write to a memory location replicated using a RAID-5 solution implemented using two or more SMCs. For instance, a write request 1605 can be received at a corresponding SMC 815a from a node 810a, requesting that data at D00 (1505) be written-over with D00new. To perform the write, the SMC 815a may read D00 (at 1610), receive (at 1615) the old value of D00 to be overwritten, and update the location with the value D00new (at 1620). To cause this update to be "replicated", the SMC 815a can cause the corresponding RAID-5 parity value (e.g., P02 (1515)) to be updated to reflect the write D00new. Accordingly, the SMC 815a which performed the write can generate an intermediate RAID parity value, P02int, by XORing the old value of D00 used in the old parity value (and read at 1615) with the new value, D00new, of D00. The SMC 815a can then send (at 1625, over an extended SML) the generated value for P02int to the SMC (e.g., 815c) hosting the corresponding RAID parity value at P02. To update the parity value at P02, the SMC 815c can retrieve (1635) the current, or "old", P02 value by performing a read 1630. The SMC 815c can then XOR the current P02 value with the P02int value received from SMC 815a to derive the updated value for P02. SMC 815c can then write the new value, P02new, to the P02 memory location.

In systems employing a RAID-based replication scheme, the corresponding system address map can be augmented to indicate the parity location for each address along with the SMCs involved in the calculation of the parity. Accordingly, on a write, the destination SMC can identify the parity SMC(s) and generate the corresponding physical address. On a failed read, the SMC (or node) can send a read to all the SMC's over which the parity is constructed (as indicated in the system address mapping) and then XOR their corresponding data to reconstruct the data requested. On a failed write, the SMC (or node) can send a read across all the SMCs, compute what the data in the failed SMC/memory would have been, re-compute the new parity(ies), and send the information to the parity SMC(s).

In a timeout or other failure event, system management software can be notified through logic of the SMC(s) and/or node(s) that detected the failure. The management software can then relocate the failed SMC and/or memory to a different place and inform the corresponding SMC(s) to reconstruct the content on the new location. One of the SMCs can drive performance of the reconstruction and notify the management software when the task completes. Any memory access attempt made on the memory or SMC being reconstructed can be checked against the new location to see if it is valid. If not, the reconstruction can be performed by the SMC ad hoc in connection with the request. Any write to a location already reconstructed, can immediately be reflected in the new location. Alternatively, system management software can either quiesce access attempts to pages being reconstructed across all nodes (or request hardware to hold off servicing them) and release the page to the new location after it completes reconstructing the data and loading it to its new location.

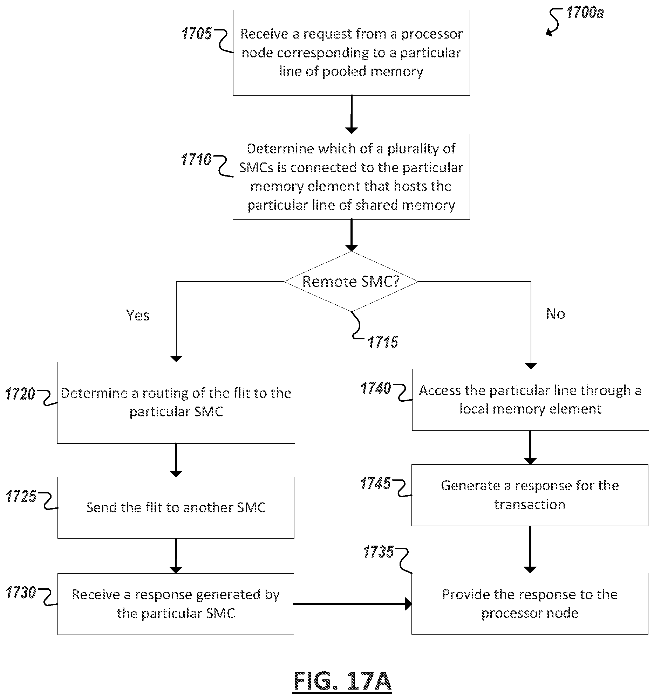

Turning to FIGS. 17A-17B, flowcharts 1700a-b are shown illustrating example techniques for communicating using a shared memory link interconnect. For instance, in FIG. 17A, a load/store memory access request can be received 1705 at one of a plurality of shared memory controllers (SMCs) (e.g., over an SML link) from a processor node, the message requesting data of a particular address of pooled memory. The message can be embodied in one or more flits, including a header flit to identify the particular address. The shared memory controller can determine 1710 from the particular address (or a destination node identifier identifying a particular one of the SMCs), that the message (or "request") is to be handled by the particular SMC because the particular SMC manages a particular one of the shared memory elements in the system that hosts the particular address. In some cases, the SMC connected directly to the processor node is the particular SMC. In other cases, the particular SMC is another one of the plurality of SMCs. The SMC can determine whether it or another one of the SMCs is to handle the request (e.g., at 1715).

In cases where the SMC determines that another SMC is the particular SMC for handling the request, the SMC can determine 1720 how to route the request to the particular SMC (over an expanded SML link). In some cases this can involve sending the request to an intervening one of the plurality of SMCs (e.g., between the SMC and the destination SMC determined from the address translation). In other cases, the SMC can determine that the routing involves sending the request directly (e.g., over a single SML link) to the particular other SMC. The SMC then sends 1725 the request (e.g., over an SML link) to the other SMC (either the particular SMC or intervening SMC). In some implementations, the format of the flit used by the processor node in its request may be augmented by the SMC to facilitate routing of the flit within a network of SMCs. For instance, the SMC may utilize one of a plurality of slots to extend an address indicated by the processor node, add a source or destination node identifier to indicate the source or destination SMC in the transaction, encode bits to indicate that the particular flit slot is being used for these purposes, among other modifications.

Once the particular SMC accesses the particular line of shared memory corresponding to the particular address, the particular SMC can send a response back to the SMC connected to the particular node. The response can include enhanced fields (such as those included in the request flits) that are used to assist in routing the response back to the source SMC (e.g., the source node ID). After being routed back along the same or a different path within a network of SMCs, the SMC connected to the particular node can receive 1730 a response generated by the particular SMC and can provide 1735 the response to the processor node. In cases where the flit format used between the SMCs represents an augmented version of a flit consumed by the processor node, the SMC can strip "extra" or enhanced fields from a response flit before providing 1735 the response to the processor node. The response may appear to the processor node as having been handled entirely by the SMC it is connected with. In other words, the node may be ignorant of that fact that the line of memory is managed by another SMC and that the request was routed over one or more other SMCs in a network of SMCs in a shared memory architecture.

In cases where the SMC determines (e.g., at 1715) that it manages the memory element hosting the requested line of memory, the SMC can access 1740 the particular line of memory from the memory element, generate the response 1745, and provide 1735 the response to the processor node.

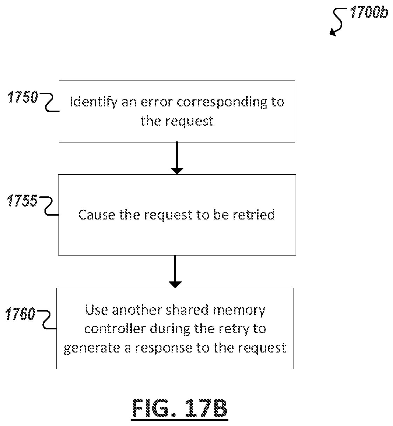

As noted above, errors can affect the completion of a memory access request received by a particular SMC from a computing node. Responding to such requests can involve potentially multiple SMCs and extended SMLs, as well as the SML over which the node and particular SMC communicate, and memory buses connecting SMCs to physical memory elements in the memory pool. Errors can potentially occur anywhere along these sometimes complex routing paths. Accordingly, nodes and/or SMCs can include logic to detect and/or handle errors detected in connection with a memory access transaction. For instance, as shown in FIG. 17B, logic in the node and/or an SMC can identify 1750 that an error has occurred in connection with a request. The error can cause the request to be retried 1755. Retrying the request can involve the node identifying that an alternate SML is to be used to deliver the retry to either the same or a different SMC. Alternatively, an SMC can use a tracked, or preserved, copy of the request to allow the SMC to send the request to another SMC (e.g., over an extended SML) and effectively retry the request on behalf of the node. The other SMC can be used 1760 to generate a response to the retried request. For instance, the other SMC can be used to access a replicated copy of the requested line of memory to allow a response to the request to be generated. The replicated copy can either be a copy of the particular line of memory hosted by the other SMC or a copy generated from a RAID-based parity value using data hosted by the other SMC. In other instances, the other SMC can also be used in an alternative routing path (e.g., in the case of a defective extended SML) in order to route the retried request to the appropriate destination SMC.

It should be noted that while much of the above principles and examples are described within the context of PCIe and particular revisions of the PCIe specification, the principles, solutions, and features described herein can be equally applicable to other protocols and systems. For instance, analogous lane errors can be detected in other links using other protocols based on analogous symbols, data streams, and tokens, as well as rules specified for the use, placement, and formatting of such structures within data transmitted over these other links. Further, alternative mechanisms and structures (e.g., beside a PCIe LES register or SKP OS) can be used to provide lane error detection and reporting functionality within a system. Moreover, combinations of the above solutions can be applied within systems, including combinations of logical and physical enhancements to a link and its corresponding logic as described herein, among other examples.

Note that the apparatus', methods', and systems described above may be implemented in any electronic device or system as aforementioned. As specific illustrations, the figures below provide exemplary systems for utilizing the invention as described herein. As the systems below are described in more detail, a number of different interconnects are disclosed, described, and revisited from the discussion above. And as is readily apparent, the advances described above may be applied to any of those interconnects, fabrics, or architectures.

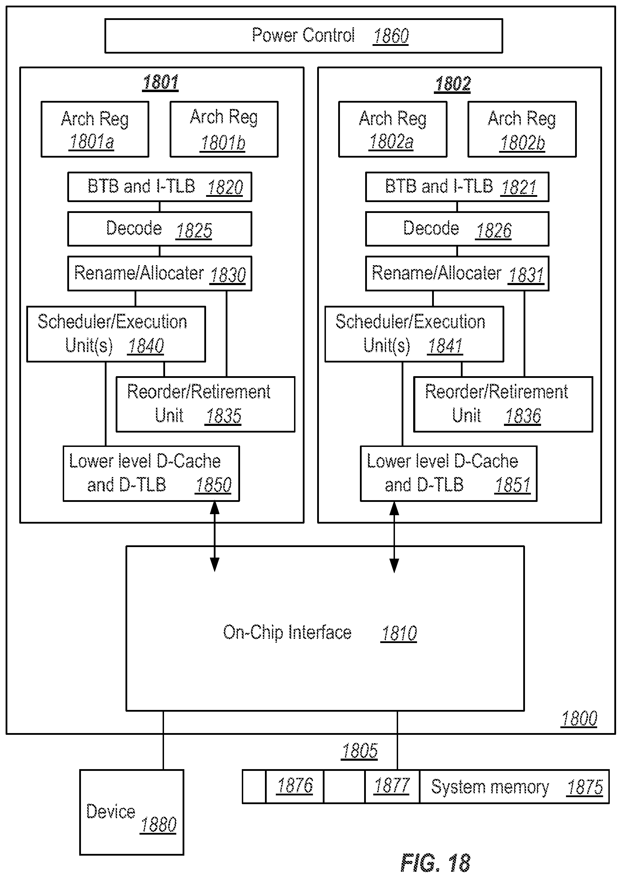

Referring to FIG. 18, an embodiment of a block diagram for a computing system including a multicore processor is depicted. Processor 1800 includes any processor or processing device, such as a microprocessor, an embedded processor, a digital signal processor (DSP), a network processor, a handheld processor, an application processor, a coprocessor, a system on a chip (SOC), or other device to execute code. Processor 1800, in one embodiment, includes at least two cores-core 1801 and 1802, which may include asymmetric cores or symmetric cores (the illustrated embodiment). However, processor 1800 may include any number of processing elements that may be symmetric or asymmetric.

In one embodiment, a processing element refers to hardware or logic to support a software thread. Examples of hardware processing elements include: a thread unit, a thread slot, a thread, a process unit, a context, a context unit, a logical processor, a hardware thread, a core, and/or any other element, which is capable of holding a state for a processor, such as an execution state or architectural state. In other words, a processing element, in one embodiment, refers to any hardware capable of being independently associated with code, such as a software thread, operating system, application, or other code. A physical processor (or processor socket) typically refers to an integrated circuit, which potentially includes any number of other processing elements, such as cores or hardware threads.

A core often refers to logic located on an integrated circuit capable of maintaining an independent architectural state, wherein each independently maintained architectural state is associated with at least some dedicated execution resources. In contrast to cores, a hardware thread typically refers to any logic located on an integrated circuit capable of maintaining an independent architectural state, wherein the independently maintained architectural states share access to execution resources. As can be seen, when certain resources are shared and others are dedicated to an architectural state, the line between the nomenclature of a hardware thread and core overlaps. Yet often, a core and a hardware thread are viewed by an operating system as individual logical processors, where the operating system is able to individually schedule operations on each logical processor.

Physical processor 1800, as illustrated in FIG. 18, includes two cores-core 1801 and 1802. Here, core 1801 and 1802 are considered symmetric cores, i.e. cores with the same configurations, functional units, and/or logic. In another embodiment, core 1801 includes an out-of-order processor core, while core 1802 includes an in-order processor core. However, cores 1801 and 1802 may be individually selected from any type of core, such as a native core, a software managed core, a core adapted to execute a native Instruction Set Architecture (ISA), a core adapted to execute a translated Instruction Set Architecture (ISA), a co-designed core, or other known core. In a heterogeneous core environment (i.e. asymmetric cores), some form of translation, such a binary translation, may be utilized to schedule or execute code on one or both cores. Yet to further the discussion, the functional units illustrated in core 1801 are described in further detail below, as the units in core 1802 operate in a similar manner in the depicted embodiment.

As depicted, core 1801 includes two hardware threads 1801a and 1801b, which may also be referred to as hardware thread slots 1801a and 1801b. Therefore, software entities, such as an operating system, in one embodiment potentially view processor 1800 as four separate processors, i.e., four logical processors or processing elements capable of executing four software threads concurrently. As alluded to above, a first thread is associated with architecture state registers 1801a, a second thread is associated with architecture state registers 1801b, a third thread may be associated with architecture state registers 1802a, and a fourth thread may be associated with architecture state registers 1802b. Here, each of the architecture state registers (1801a, 1801b, 1802a, and 1802b) may be referred to as processing elements, thread slots, or thread units, as described above. As illustrated, architecture state registers 1801a are replicated in architecture state registers 1801b, so individual architecture states/contexts are capable of being stored for logical processor 1801a and logical processor 1801b. In core 1801, other smaller resources, such as instruction pointers and renaming logic in allocator and renamer block 1830 may also be replicated for threads 1801a and 1801b. Some resources, such as re-order buffers in reorder/retirement unit 1835, ILTB 1820, load/store buffers, and queues may be shared through partitioning. Other resources, such as general purpose internal registers, page-table base register(s), low-level data-cache and data-TLB 1815, execution unit(s) 1840, and portions of out-of-order unit 1835 are potentially fully shared.

Processor 1800 often includes other resources, which may be fully shared, shared through partitioning, or dedicated by/to processing elements. In FIG. 18, an embodiment of a purely exemplary processor with illustrative logical units/resources of a processor is illustrated. Note that a processor may include, or omit, any of these functional units, as well as include any other known functional units, logic, or firmware not depicted. As illustrated, core 1801 includes a simplified, representative out-of-order (OOO) processor core. But an in-order processor may be utilized in different embodiments. The OOO core includes a branch target buffer 1820 to predict branches to be executed/taken and an instruction-translation buffer (I-TLB) 1820 to store address translation entries for instructions.

Core 1801 further includes decode module 1825 coupled to fetch unit 1820 to decode fetched elements. Fetch logic, in one embodiment, includes individual sequencers associated with thread slots 1801a, 1801b, respectively. Usually core 1801 is associated with a first ISA, which defines/specifies instructions executable on processor 1800. Often machine code instructions that are part of the first ISA include a portion of the instruction (referred to as an opcode), which references/specifies an instruction or operation to be performed. Decode logic 1825 includes circuitry that recognizes these instructions from their opcodes and passes the decoded instructions on in the pipeline for processing as defined by the first ISA. For example, as discussed in more detail below decoders 1825, in one embodiment, include logic designed or adapted to recognize specific instructions, such as transactional instruction. As a result of the recognition by decoders 1825, the architecture or core 1801 takes specific, predefined actions to perform tasks associated with the appropriate instruction. It is important to note that any of the tasks, blocks, operations, and methods described herein may be performed in response to a single or multiple instructions; some of which may be new or old instructions. Note decoders 1826, in one embodiment, recognize the same ISA (or a subset thereof). Alternatively, in a heterogeneous core environment, decoders 1826 recognize a second ISA (either a subset of the first ISA or a distinct ISA).

In one example, allocator and renamer block 1830 includes an allocator to reserve resources, such as register files to store instruction processing results. However, threads 1801a and 1801b are potentially capable of out-of-order execution, where allocator and renamer block 1830 also reserves other resources, such as reorder buffers to track instruction results. Unit 1830 may also include a register renamer to rename program/instruction reference registers to other registers internal to processor 1800. Reorder/retirement unit 1835 includes components, such as the reorder buffers mentioned above, load buffers, and store buffers, to support out-of-order execution and later in-order retirement of instructions executed out-of-order.

Scheduler and execution unit(s) block 1840, in one embodiment, includes a scheduler unit to schedule instructions/operation on execution units. For example, a floating point instruction is scheduled on a port of an execution unit that has an available floating point execution unit. Register files associated with the execution units are also included to store information instruction processing results. Exemplary execution units include a floating point execution unit, an integer execution unit, a jump execution unit, a load execution unit, a store execution unit, and other known execution units.

Lower level data cache and data translation buffer (D-TLB) 1850 are coupled to execution unit(s) 1840. The data cache is to store recently used/operated on elements, such as data operands, which are potentially held in memory coherency states. The D-TLB is to store recent virtual/linear to physical address translations. As a specific example, a processor may include a page table structure to break physical memory into a plurality of virtual pages.

Here, cores 1801 and 1802 share access to higher-level or further-out cache, such as a second level cache associated with on-chip interface 1810. Note that higher-level or further-out refers to cache levels increasing or getting further way from the execution unit(s). In one embodiment, higher-level cache is a last-level data cache-last cache in the memory hierarchy on processor 1800-such as a second or third level data cache. However, higher level cache is not so limited, as it may be associated with or include an instruction cache. A trace cache-a type of instruction cache-instead may be coupled after decoder 1825 to store recently decoded traces. Here, an instruction potentially refers to a macro-instruction (i.e. a general instruction recognized by the decoders), which may decode into a number of micro-instructions (micro-operations).

In the depicted configuration, processor 1800 also includes on-chip interface module 1810. Historically, a memory controller, which is described in more detail below, has been included in a computing system external to processor 1800. In this scenario, on-chip interface 1810 is to communicate with devices external to processor 1800, such as system memory 1875, a chipset (in some cases including a memory controller hub or shared memory controller to connect to memory 1875 and an I/O controller hub to connect peripheral devices), a memory controller hub, a northbridge, or other integrated circuit. And in this scenario, link 1805 may include any known interconnect, such as multi-drop bus, a point-to-point interconnect, a serial interconnect, a parallel bus, a coherent (e.g. cache coherent) bus, a layered protocol architecture, a differential bus, a GTL bus, or an SML link.

Memory 1875 may be dedicated to processor 1800 or shared with other devices in a system. Common examples of types of memory 1875 include DRAM, SRAM, non-volatile memory (NV memory), and other known storage devices. Note that device 1880 may include a graphic accelerator, processor or card coupled to a memory controller hub, data storage coupled to an I/O controller hub, a wireless transceiver, a flash device, an audio controller, a network controller, or other known device.

Recently however, as more logic and devices are being integrated on a single die, such as SOC, each of these devices may be incorporated on processor 1800. For example in one embodiment, a memory controller hub is on the same package and/or die with processor 1800. Here, a portion of the core (an on-core portion) 1810 includes one or more controller(s) for interfacing with other devices such as memory 1875 or a graphics device 1880. The configuration including an interconnect and controllers for interfacing with such devices is often referred to as an on-core (or un-core configuration). As an example, on-chip interface 1810 includes a ring interconnect for on-chip communication and a high-speed serial point-to-point link 1805 for off-chip communication. Yet, in the SOC environment, even more devices, such as the network interface, co-processors, memory 1875, graphics processor 1880, and any other known computer devices/interface may be integrated on a single die or integrated circuit to provide small form factor with high functionality and low power consumption.

In one embodiment, processor 1800 is capable of executing a compiler, optimization, and/or translator code 1877 to compile, translate, and/or optimize application code 1876 to support the apparatus and methods described herein or to interface therewith. A compiler often includes a program or set of programs to translate source text/code into target text/code. Usually, compilation of program/application code with a compiler is done in multiple phases and passes to transform hi-level programming language code into low-level machine or assembly language code. Yet, single pass compilers may still be utilized for simple compilation. A compiler may utilize any known compilation techniques and perform any known compiler operations, such as lexical analysis, preprocessing, parsing, semantic analysis, code generation, code transformation, and code optimization.

Larger compilers often include multiple phases, but most often these phases are included within two general phases: (1) a front-end, i.e. generally where syntactic processing, semantic processing, and some transformation/optimization may take place, and (2) a back-end, i.e. generally where analysis, transformations, optimizations, and code generation takes place. Some compilers refer to a middle, which illustrates the blurring of delineation between a front-end and back end of a compiler. As a result, reference to insertion, association, generation, or other operation of a compiler may take place in any of the aforementioned phases or passes, as well as any other known phases or passes of a compiler. As an illustrative example, a compiler potentially inserts operations, calls, functions, etc. in one or more phases of compilation, such as insertion of calls/operations in a front-end phase of compilation and then transformation of the calls/operations into lower-level code during a transformation phase. Note that during dynamic compilation, compiler code or dynamic optimization code may insert such operations/calls, as well as optimize the code for execution during runtime. As a specific illustrative example, binary code (already compiled code) may be dynamically optimized during runtime. Here, the program code may include the dynamic optimization code, the binary code, or a combination thereof.

Similar to a compiler, a translator, such as a binary translator, translates code either statically or dynamically to optimize and/or translate code. Therefore, reference to execution of code, application code, program code, or other software environment may refer to: (1) execution of a compiler program(s), optimization code optimizer, or translator either dynamically or statically, to compile program code, to maintain software structures, to perform other operations, to optimize code, or to translate code; (2) execution of main program code including operations/calls, such as application code that has been optimized/compiled; (3) execution of other program code, such as libraries, associated with the main program code to maintain software structures, to perform other software related operations, or to optimize code; or (4) a combination thereof.

While the present invention has been described with respect to a limited number of embodiments, those skilled in the art will appreciate numerous modifications and variations therefrom.

A design may go through various stages, from creation to simulation to fabrication. Data representing a design may represent the design in a number of manners. First, as is useful in simulations, the hardware may be represented using a hardware description language or another functional description language. Additionally, a circuit level model with logic and/or transistor gates may be produced at some stages of the design process. Furthermore, most designs, at some stage, reach a level of data representing the physical placement of various devices in the hardware model. In the case where conventional semiconductor fabrication techniques are used, the data representing the hardware model may be the data specifying the presence or absence of various features on different mask layers for masks used to produce the integrated circuit. In any representation of the design, the data may be stored in any form of a machine readable medium. A memory or a magnetic or optical storage such as a disc may be the machine readable medium to store information transmitted via optical or electrical wave modulated or otherwise generated to transmit such information. When an electrical carrier wave indicating or carrying the code or design is transmitted, to the extent that copying, buffering, or re-transmission of the electrical signal is performed, a new copy is made. Thus, a communication provider or a network provider may store on a tangible, machine-readable medium, at least temporarily, an article, such as information encoded into a carrier wave, embodying techniques of embodiments of the present invention.

A module as used herein refers to any combination of hardware, software, and/or firmware. As an example, a module includes hardware, such as a micro-controller, associated with a non-transitory medium to store code adapted to be executed by the micro-controller. Therefore, reference to a module, in one embodiment, refers to the hardware, which is specifically configured to recognize and/or execute the code to be held on a non-transitory medium. Furthermore, in another embodiment, use of a module refers to the non-transitory medium including the code, which is specifically adapted to be executed by the microcontroller to perform predetermined operations. And as can be inferred, in yet another embodiment, the term module (in this example) may refer to the combination of the microcontroller and the non-transitory medium. Often module boundaries that are illustrated as separate commonly vary and potentially overlap. For example, a first and a second module may share hardware, software, firmware, or a combination thereof, while potentially retaining some independent hardware, software, or firmware. In one embodiment, use of the term logic includes hardware, such as transistors, registers, or other hardware, such as programmable logic devices.

Use of the phrase 'configured to,' in one embodiment, refers to arranging, putting together, manufacturing, offering to sell, importing and/or designing an apparatus, hardware, logic, or element to perform a designated or determined task. In this example, an apparatus or element thereof that is not operating is still 'configured to' perform a designated task if it is designed, coupled, and/or interconnected to perform said designated task. As a purely illustrative example, a logic gate may provide a 0 or a 1 during operation. But a logic gate 'configured to' provide an enable signal to a clock does not include every potential logic gate that may provide a 1 or 0. Instead, the logic gate is one coupled in some manner that during operation the 1 or 0 output is to enable the clock. Note once again that use of the term 'configured to' does not require operation, but instead focus on the latent state of an apparatus, hardware, and/or element, where in the latent state the apparatus, hardware, and/or element is designed to perform a particular task when the apparatus, hardware, and/or element is operating.

Furthermore, use of the phrases 'to,' 'capable of/to,' and or 'operable to,' in one embodiment, refers to some apparatus, logic, hardware, and/or element designed in such a way to enable use of the apparatus, logic, hardware, and/or element in a specified manner. Note as above that use of to, capable to, or operable to, in one embodiment, refers to the latent state of an apparatus, logic, hardware, and/or element, where the apparatus, logic, hardware, and/or element is not operating but is designed in such a manner to enable use of an apparatus in a specified manner.

A value, as used herein, includes any known representation of a number, a state, a logical state, or a binary logical state. Often, the use of logic levels, logic values, or logical values is also referred to as 1's and 0's, which simply represents binary logic states. For example, a 1 refers to a high logic level and 0 refers to a low logic level. In one embodiment, a storage cell, such as a transistor or flash cell, may be capable of holding a single logical value or multiple logical values. However, other representations of values in computer systems have been used. For example the decimal number ten may also be represented as a binary value of 1810 and a hexadecimal letter A. Therefore, a value includes any representation of information capable of being held in a computer system.

Moreover, states may be represented by values or portions of values. As an example, a first value, such as a logical one, may represent a default or initial state, while a second value, such as a logical zero, may represent a non-default state. In addition, the terms reset and set, in one embodiment, refer to a default and an updated value or state, respectively. For example, a default value potentially includes a high logical value, i.e. reset, while an updated value potentially includes a low logical value, i.e. set. Note that any combination of values may be utilized to represent any number of states.

The embodiments of methods, hardware, software, firmware or code set forth above may be implemented via instructions or code stored on a machine-accessible, machine readable, computer accessible, or computer readable medium which are executable by a processing element. A non-transitory machine-accessible/readable medium includes any mechanism that provides (i.e., stores and/or transmits) information in a form readable by a machine, such as a computer or electronic system. For example, a non-transitory machine-accessible medium includes random-access memory (RAM), such as static RAM (SRAM) or dynamic RAM (DRAM); ROM; magnetic or optical storage medium; flash memory devices; electrical storage devices; optical storage devices; acoustical storage devices; other form of storage devices for holding information received from transitory (propagated) signals (e.g., carrier waves, infrared signals, digital signals); etc., which are to be distinguished from the non-transitory mediums that may receive information there from.

Instructions used to program logic to perform embodiments of the invention may be stored within a memory in the system, such as DRAM, cache, flash memory, or other storage. Furthermore, the instructions can be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magneto-optical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer).

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In the foregoing specification, a detailed description has been given with reference to specific exemplary embodiments. It will, however, be evident that various modifications and changes may be made thereto without departing from scope of the invention as set forth in the appended claims. The specification and drawings are, accordingly, to be regarded in an illustrative sense rather than a restrictive sense. Furthermore, the foregoing use of embodiment and other exemplarily language does not necessarily refer to the same embodiment or the same example, but may refer to different and distinct embodiments, as well as potentially the same embodiment.

## Claims

1. An apparatus comprising:
an error detection logic;
a first shared memory controller (815) configured to control access to a portion of a memory pool (805); and
at least two first interfaces and at least one second interface, or at least one first interface and at least two second interfaces, wherein first interfaces are Shared Memory Link interfaces which are configured to link shared memory controllers (815) and computing nodes (810) together, and wherein second interfaces are extended Shared Memory Link interfaces which are configured to link shared memory controllers (815) together;
wherein the first shared memory controller (815) is configured to:
receive, by a first interface, a memory access request from a computing node (810), wherein the request corresponds to a particular line of pooled memory (805),
identify, by the error detection logic, an error that has occurred in connection with the request,
send, by a second interface, the request to a second shared memory controller (815) in response to the error, and
receive, by said second interface, a response to the request from the second shared memory controller (805).

2. The apparatus of Claim 1, wherein the first shared memory controller (815) comprises an error detection logic.

3. The apparatus of any one of Claims 1-2, wherein the computing node (810) comprises an error detection logic.

4. The apparatus of any one of Claims 1-3, wherein the error is one of an error of a memory bus corresponding to the particular line of pooled memory (805), an error corresponding to a particular memory element hosting the particular line of pooled memory (805), a shared memory controller error, and an error in a shared memory link to communicatively couple the first shared memory controller (815) to the second shared memory controller (815).

5. The apparatus of any one of Claims 1-4, wherein the first shared memory controller (815) comprises routing logic to determine from an address map that the second shared memory controller (815) is to be used to handle the error.

6. The apparatus of any one of Claims 1-5, wherein the second shared memory controller (815) is determined to provide access to a replication of the particular line of pooled memory (805).

7. The apparatus of any one of Claims 1-6, wherein the replication comprises a copy of the particular line of pooled memory (805) stored in another portion of the pooled memory (805) managed by the second shared memory controller (815).

8. The apparatus of any one of Claims 1-7, wherein the replication is to be derived from a redundant array of independent disks (RAID) parity value.

9. The apparatus of any one of Claims 1-8, wherein the error detection logic comprises a global timer and a plurality of counters based on the global timer.

10. The apparatus of any one of Claims 1-9, wherein the first shared memory controller (815) is to cause the request to be retried using the second shared memory controller (815) on behalf of the computing node (810).

## Patentansprüche

1. Vorrichtung, Folgendes umfassend:
eine Fehlererkennungslogik;
einen ersten Shared Memory-Controller (815), der dazu ausgelegt ist, den Zugriff auf einen Teil eines Speicherpools (805) zu steuern; und
mindestens zwei erste Schnittstellen und mindestens eine zweite Schnittstelle, oder mindestens eine erste Schnittstelle und mindestens zwei zweite Schnittstellen,
wobei die ersten Schnittstellen Shared Memory Link-Schnittstellen sind, die dazu ausgelegt sind, Shared Memory-Controller (815) und Rechenknoten (810) miteinander zu verknüpfen, und
wobei die zweiten Schnittstellen erweiterte Shared Memory Link-Schnittstellen sind, die dazu ausgelegt sind, Shared Memory-Controller (815) miteinander zu verknüpfen;
wobei der erste Shared Memory-Controller (815) für Folgendes ausgelegt ist:
Empfangen, durch eine erste Schnittstelle, einer Speicherzugriffsanforderung von einem Rechenknoten (810),
wobei die Anforderung einer speziellen Zeile von gepooltem Speicher (805) entspricht,
Identifizieren, durch die Fehlererkennungslogik, eines Fehlers, der in Verbindung mit der Anforderung aufgetreten ist,
Senden, durch eine zweite Schnittstelle, der Anforderung zu einem zweiten Shared Memory-Controller (815) in Reaktion auf den Fehler, und
Empfangen, durch die zweite Schnittstelle, einer Antwort auf die Anforderung von dem zweiten Shared Memory-Controller (805).

2. Vorrichtung nach Anspruch 1, wobei der erste Shared Memory-Controller (815) eine Fehlererkennungslogik umfasst.

3. Vorrichtung nach einem beliebigen der Ansprüche 1-2, wobei der Rechenknoten (810) eine Fehlererkennungslogik umfasst.

4. Vorrichtung nach einem beliebigen der Ansprüche 1-3, wobei der Fehler einer eines Fehlers eines Speicherbusses ist, welcher der speziellen Zeile des gepoolten Speichers (805) entspricht, eines Fehlers, der einem speziellen Speicherelement entspricht, das die spezielle Zeile des gepoolten Speichers (805) beherbergt, eines Fehlers des Shared Memory-Controllers und eines Fehlers in einer Shared Memory-Verbindung, um den ersten Shared Memory-Controller (815) kommunikativ mit dem zweiten Shared Memory-Controller (815) zu koppeln.

5. Vorrichtung nach einem beliebigen der Ansprüche 1-4, wobei der erste Shared Memory-Controller (815) Routinglogik umfasst, um anhand einer Adressenkarte zu bestimmen, dass der zweite Shared Memory-Controller (815) zur Handhabung des Fehlers zu verwenden ist.

6. Vorrichtung nach einem beliebigen der Ansprüche 1-5, wobei der zweite Shared Memory-Controller (815) dazu bestimmt ist, Zugang zu einer Replikation der speziellen Zeile des gepoolten Speichers (805) bereitzustellen.

7. Vorrichtung nach einem beliebigen der Ansprüche 1-6, wobei die Replikation eine Kopie der speziellen Zeile des gepoolten Speichers (805) umfasst, gespeichert in einem anderen Teil des gepoolten Speichers (805), verwaltet von dem zweiten Shared Memory-Controller (815).

8. Vorrichtung nach einem beliebigen der Ansprüche 1-7, wobei die Replikation von einem Paritätswert eines Redundant Array of Independent Disks (RAID) abzuleiten ist.

9. Vorrichtung nach einem beliebigen der Ansprüche 1-8, wobei die Fehlererkennungslogik einen globalen Timer und eine Vielzahl von auf dem globalen Timer basierenden Zählern umfasst.

10. Vorrichtung nach einem beliebigen der Ansprüche 1-9, wobei der erste Shared Memory-Controller (815) die Aufgabe hat zu bewirken, dass die Anforderung unter Verwendung des zweiten Shared Memory-Controllers (815) im Interesse des Rechenknotens (810) erneut versucht wird.

## Revendications

1. Appareil comprenant :
une logique de détection d'erreur,
un premier contrôleur de mémoire partagée (815) configuré pour commander l'accès à une partie d'un groupe de mémoires (805), et
au moins deux premières interfaces et au moins une seconde interface, ou bien au moins une première interface et au moins deux secondes interfaces, où les premières interfaces sont des interfaces de liaison à une mémoire partagée qui sont configurées pour relier des contrôleurs de mémoire partagée (815) et des nœuds de calcul (810), et où les secondes interfaces sont des interfaces de liaison à une mémoire partagée étendue qui sont configurées pour relier des contrôleurs de mémoire partagée (815),
dans lequel le premier contrôleur de mémoire partagée (815) est configuré pour :
recevoir, grâce à une première interface, une requête d'accès en mémoire en provenance d'un nœud de calcul (810), la requête correspondant à une ligne particulière de mémoire en groupe (805),
identifier, grâce à la logique de détection d'erreur, une erreur qui s'est produite en relation avec la requête,
envoyer, grâce à une seconde interface, la requête à un second contrôleur de mémoire partagée (815) en réponse à l'erreur, et
recevoir, grâce à ladite seconde interface, une réponse à la requête émise par le second contrôleur de mémoire partagée (805).

2. Appareil selon la revendication 1, dans lequel le premier contrôleur de mémoire partagée (815) comprend une logique de détection d'erreur.

3. Appareil selon l'une quelconque des revendications 1 et 2, dans lequel le nœud de calcul (810) comprend une logique de détection d'erreur.

4. Appareil selon l'une quelconque des revendications 1 à 3, dans lequel l'erreur est l'une parmi une erreur de bus mémoire correspondant à la ligne particulière de la mémoire en groupe (805), une erreur correspondant à un élément mémoire particulier hébergeant la ligne particulière de mémoire en groupe (805), une erreur de contrôleur de mémoire partagée et une erreur dans une liaison de mémoire partagée destinée à coupler par communication le premier contrôleur de mémoire partagée (815) au second contrôleur de mémoire partagée (815).

5. Appareil selon l'une quelconque des revendications 1 à 4, dans lequel le premier contrôleur de mémoire partagée (815) comprend une logique d'acheminement destinée à déterminer à partir d'une mappe d'adressage que le second contrôleur de mémoire partagée (815) doit être utilisé pour prendre en charge l'erreur.

6. Appareil selon l'une quelconque des revendications 1 à 5, dans lequel le second contrôleur de mémoire partagée (815) est déterminé fournir un accès à une reproduction de la ligne particulière de mémoire en groupe (805).

7. Appareil selon l'une quelconque des revendications 1 à 6, dans lequel la reproduction comprend une copie de la ligne particulière de mémoire en groupe (805) stockée dans une autre partie de la mémoire en groupe (805) gérée par le second contrôleur de mémoire partagée (815).

8. Appareil selon l'une quelconque des revendications 1 à 7, dans lequel la reproduction doit être déduite de la valeur de parité d'un réseau redondant de disques indépendants (RAID).

9. Appareil selon l'une quelconque des revendications 1 à 8, dans lequel la logique de détection d'erreur comprend une horloge globale et une pluralité de compteurs fondés sur l'horloge globale.

10. Appareil selon l'une quelconque des revendications 1 à 9, dans lequel le premier contrôleur de mémoire partagée (815) doit amener un nouvel essai de la requête en utilisant le second contrôleur de mémoire partagée (815) pour le compte du nœud de calcul (810).
